# EUROPÄISCHE PATENTSCHRIFT

(11) **EP 3 986 675 B1**
(45) Veröffentlichungstag und Bekanntmachung des Hinweises auf die Patenterteilung: **26.10.2022**
(21) Anmeldenummer: 20747358.8
(22) Anmeldetag: 23.07.2020
(51) Int. Cl.: B25J 9/08, B25J 19/00, G02B 6/36, G02B 6/38

(54) **INDUSTRIEROBOTER**
INDUSTRIAL ROBOT
ROBOT INDUSTRIEL

(30) Priorität: 25.07.2019 DE 102019120131
(43) Veröffentlichungstag der Anmeldung: 27.04.2022
(73) Patentinhaber: Beckhoff Automation GmbH, 33415 Verl (DE)
(72) Erfinder: KASTLER, Peter, 1220 Wien (AT); MAIER, Clemens, 6700 Bludenz (AT); MORSCHER, Thomas, 1080 Wien (AT); PEHLIVAN, Armin, 6714 Nüziders (AT); ZECH, Christoph, 1130 Wien (AT); BÜCHINGER, Leo, 2560 Berndorf (AT); BECKHOFF, Hans, 33415 Verl (DE); JANSSEN, Dirk, 33415 Verl (DE); PRÜSSMEIER, Uwe, 32657 Lemgo (DE); PFISTER, Michael, 97840 Hafenlohr (DE)
(74) Vertreter: Patentanwaltskanzlei WILHELM & BECK
(86) Internationale Anmeldenummer: PCT/EP2020/070754
(87) Internationale Veröffentlichungsnummer: WO 2021/013912

(56) Entgegenhaltungen:
- DE-U1-202014 010 032
- US-A- 5 039 193
- US-A1- 2008 118 204
- US-A1- 2013 340 560
- US-B1- 8 786 385
- US-B1- 8 909 008

## Beschreibung

Die Erfindung betrifft einen Industrieroboter.

Diese Patentanmeldung beansprucht die Priorität der deutschen Patentanmeldung DE 10 2019 120 131.4, eingereicht am 25.07.2019 mit dem Titel OPTISCHE ROTATIONS-ÜBERTRAGUNGSEINRICHTUNG FÜR EIN AUTOMATISIERUNGSSYSTEM, ARMMODUL FÜR EINEN MODULAREN ROBOTERARM SOWIE INDUSTRIEROBOTER, auf deren Offenbarungsgehalt hiermit durch Rückbezug aufgenommen wird.

Die technische Disziplin der Automatisierungstechnik (Implementieren, Messen, Steuern/Regeln, Kommunikation, Mensch/Maschine-Schnittstelle, Sicherheit etc.) hat zur Aufgabe, Maschinen inkl. Industrieroboter und/oder Anlagen zu automatisieren, d. h. aus sich heraus selbständig und ohne Mitwirkung eines Menschen betreiben zu können. Ein Grad der Automatisierung (Verhältnis der automatisierten Fertigungsschritte zu allen Fertigungsschritten) in einem Automatisierungssystem ist umso höher, je unabhängiger eine jeweilige Maschine in einer Anlage und/oder eine betreffende Anlage von menschlichen Eingriffen ist bzw. sind.

Ziele der Automatisierungstechnik sind eine Entlastung des Menschen von gefährlichen, anstrengenden und/oder eintönigen Tätigkeiten, eine Verbesserung einer Qualität durch die technische Anlage, eine höhere Leistungsfähigkeit der Anlage und eine Kostenreduktion durch die Anlage. Durch Fortschritte bei Maschinen, einer Signalerfassung, einer Signalverarbeitung und/oder einer Kommunikation (Vernetzung) von Komponenten innerhalb des Automatisierungssystems, kann der Automatisierungsgrad einer bestehenden oder einer neuen Anlage im Vergleich mit dem Stand der Technik deutlich gesteigert werden.

Für eine Kommunikation weist ein Automatisierungssystem entsprechende Komponenten auf, die meist in einem sogenannten Local Area Network (LAN) miteinander kommunizieren, welches ein räumlich begrenztes Netzwerk ist, in welchem die verschiedenen Netzwerkkomponenten kabellos, optisch, elektrisch und/oder optoelektrisch miteinander gekoppelt sind. Bei den Netzwerkkomponenten kann es sich um einen oder mehrere Server und eine oder mehrere Arbeitsstationen (Maschinen), sogenannte Netzwerkelemente bzw. topologisch: Netzwerkknoten, handeln, welche z. B. über Funkstrecken, Lichtwellenleiter, Koaxialkabel und/oder Twisted-Pair-Kabel (Netzwerkkanten) miteinander verbunden sind und über diese kommunizieren können.

Ein in der Automatisierungstechnik eingesetztes Automatisierungs-Kommunikationsnetzwerk entspricht in der Regel einem sogenannten Feldbussystem. Ein Feldbussystem ist ein Bussystem, bei welchem dezentral angeordnete Komponenten einer Maschinenperipherie wie Eingangsmodule, Ausgangsmodule, Antriebe, Bedienterminals etc. über das Feldbussystem mit Steuereinheiten verbunden sind. Für die Datenübertragung steht ein gemeinsamer Übertragungskanal, z. B. in Form des Feldbusses oder als eine Funkstrecke zur Verfügung. Die Kommunikation zwischen den Netzwerkkomponenten innerhalb des LANs erfolgt auf Basis von Netzwerkprotokollen.

Anwendungsspezifische Industrieroboter (Manipulatoren) sind ein fester Bestandteil von automatisierten Anlagen. Ein Industrieroboter ist eine programmierbare Maschine zur Handhabung, Montage und/oder Bearbeitung von Werkstücken. Der Industrieroboter umfasst im Allgemeinen eine Roboterbasis, einen Roboterarm (Manipulator) mit einer Mehrzahl von gegeneinander schwenkbaren und/oder drehbaren (Drehwinkel beschränkt, ggf. etwas größer als ca. 360°) proximalen (zu einer Roboterbasis hin) und distalen (von der Roboterbasis entfernt) Armgliedern, einen (End-)Effektor (Roboterhand, Werkzeug, Greifer etc.), eine lokale Steuerung/Regelung und ggf. eine globale Steuerung/Regelung. Oft sind Industrieroboter mit unterschiedlichen Sensoren ausgerüstet. Programmiert ist der Industrieroboter in der Lage, einen Arbeitsablauf autonom durchzuführen oder eine Durchführung einer Aufgabe in Abhängigkeit von Informationen eines Sensors zu verändern.

Einander betreffende, gegeneinander schwenkbare oder drehbare Armglieder besitzen eine gemeinsame mechanische Schnittstelle, wobei jenseits der mechanischen Schnittstelle optische und/oder elektrische Steuerungsinformationen geschickt sowie elektrische Energie transportiert und ggf. ein Fluid (Gas(e) und/oder Flüssigkeit(en)) hinweg geführt werden müssen. Problematisch ist dabei u. a., wie eine Hochgeschwindigkeits-Datenübertragung über zwei gegeneinander rotierbare Armglieder mittels Lichtwellenleiter erfolgen kann. D. h. es soll mittels Lichtwellenleiter eine Hochgeschwindigkeits-Datenübertragung über eine Rotations-Schnittstelle realisiert werden, deren dem Industrieroboter abgewandte/zugewandte eine Seite gegenüber der dem Industrieroboter zugewandten/abgewandten anderen Seite bevorzugt beliebig oft umdrehen, d. h. rotieren, kann, sich also Drehwinkel deutlich größer (Rotationswinkel) als 360° bis 720° realisieren lassen. Hierfür wird ein optischer Rotationsübertrager benötigt.

Aus der WO 2012/136645 A1 ein axialer optischer Einkanal-Rotationsübertrager bekannt, bei dem ein erster Abschnitt mit einem Lichtwellenleiter stationär und ein zweiter Abschnitt gegenüber dem ersten Abschnitt rotierbar über zwei Radialkugellager gelagert ist. Um eine gute optische Kopplung zwischen den beiden Lichtwellenleitern für einen optischen Gang zu gewährleisten, ist eine genaue Ausrichtung der beiden Endabschnitte der Lichtwellenleiter zueinander notwendig. Der Abstand zwischen den Längsenden der Lichtwellenleiter soll dabei gering sein, wobei sich die Längsenden der Lichtwellenleiter nicht berühren dürfen, um einen mechanischen Abrieb zu vermeiden. Der Aufbau des Rotationsübertragers ist jedoch aufwändig und teuer und erfordert darüber hinaus wegen der Radialkugellager viel Platz.

Die DE 20 2016 104 373 U1 offenbart einen axialen Rotationsübertrager zur optischen Signalübertragung zwischen einem Stator und einem Rotor. Der Rotationsübertrager umfasst ein erstes Gehäuse und ein zweites Gehäuse, welche relativ zueinander um eine gemeinsame Rotationsachse rotierbar sind, wobei das erste Gehäuse und das zweite Gehäuse jeweils eine Öffnung entlang der Rotationsachse aufweisen. In jedem der Gehäuse ist ein Anschlussbereich für eine Ferrule und einen zugehörigen Lichtwellenleiter vorgesehen. Ferner weisen die Gehäuse jeweils eine auf der gemeinsamen Rotationsachse angeordnete Kugellinse auf, die einander zugewandt über einen Luftspalt beabstandet an den jeweiligen Öffnungen angeordnet ist. Hierbei sind das erste Gehäuse und das zweite Gehäuse mittels zweier Wälzlager miteinander rotierbar gekoppelt, wobei das erste Gehäuse das zweite Gehäuse und die beiden Wälzlager umgreift, und das zweite Gehäuse in beiden Wälzlagern aufgenommen ist. Auch hier erfordert der Einbau der zwei Wälzlager im Rotationsübertrager viel Platz und verhindert einen kostengünstigen Aufbau.

Aus der DE 20 2014 010032 U1 ist ein Industrieroboter mit den Merkmalen des Obergriffs des Anspruchs 1 bekannt. Die US 8 909 008 B1, die US 8 786 385 B1 und die US 2008/118204 A1 offenbaren eine optische Signalübertragung mit Hilfe von drehbaren Ferrulen, die innerhalb einer Radiallagerhülse angeordnet sind. Weiterer Stand der Technik aus der US 5 039 193 A und der US 2013/340560 A1 bekannt.

Da die Armglieder eines Industrieroboters nur einen geringen Bauraum besitzen, ist es eine Aufgabe der Erfindung, einen im Vergleich mit dem Stand der Technik vergleichsweise kleinen optischen kostengünstigen Rotationsübertrager anzugeben. Ferner ist es eine Aufgabe der Erfindung, ein Armglied für einen Industrieroboter anzugeben, mittels welchem eine optische Signalübertragung innerhalb eines Roboterarms eines Industrieroboters möglich ist. Des Weiteren ist es eine Aufgabe der Erfindung, einen solchen Roboterarm sowie einen solchen Industrieroboter anzugeben.

Die Aufgabe der Erfindung ist mit einem Industrieroboter gemäß den unabhängigen Ansprüchen gelöst. Vorteilhafte Weiterbildungen sind in den abhängigen Ansprüchen angeben.

Die Rotations-Übertragungseinrichtung für eine optische Signalübertragung weist eine optomechanische Rotations-Schnittstelle mit einer ersten Schnittstellenseite und einer zweiten Schnittstellenseite, die einander zugewandt und jeweils im Wesentlichen rotationssymmetrisch und zueinander komplementär ausgebildet sind, auf. Die erste Schnittstellenseite und die zweite Schnittstellenseite sind gegeneinander rotierbar eingerichtet. Die erste Schnittstellenseite und die zweite Schnittstellenseite sind untereinander mechanisch radialgleitgelagert mittels eines Radialgleitlagers auf der einen Schnittstellenseite und einer dazu komplementären Gleitlagerschale auf der anderen Schnittstellenseite. Zwischen der ersten Schnittstellenseite und der zweiten Schnittstellenseite ist in Axialrichtung der Rotations-Übertragungseinrichtung ein Spalt ausgebildet, über den die optische Signalübertragung hinweg erfolgt.

Das Radialgleitlager unterbindet zwei von drei translatorischen Freiheitsgraden (Achsen hoch und quer zur Rotationsachse, also sämtliche Radialrichtungen) sowie aufgrund seiner insbesondere deutlichen axialen Erstreckung zwei von drei rotatorischen Freiheitsgraden (Rotationsachsen hoch und quer zur Rotationsachse der Rotations-Schnittstelle). Das Radialgleitlager ist auch als Rotationsgleitlager bezeichenbar.

Unter einer Rotation werden Drehungen verstanden, mittels welcher eine beliebige Anzahl von vollen Umdrehungen (360°), bevorzugt in jeweils beide Umfangsrichtungen, um eine Rotationsachse möglich ist. Unter einer Rotation wird gleichzeitig auch eine Drehung um etwas kleiner oder etwas größer als ca. 360° um die Rotationsachse verstanden.

Die Rotations-Übertragungseinrichtung ist als eine axiale (on-axis) optische Einkanal-Rotations-Übertragungseinrichtung ausgebildet. Von den Schnittstellenseiten ist wenigstens eine als eine rotierbare Schnittstellenseite ausgebildet. Hierbei können auch beide Schnittstellenseiten jeweils als eine rotierbare Schnittstellenseite ausgebildet sein.

Die Signalübertragung über die gegeneinander rotierbaren Schnittstellenseiten hinweg, bzw. die Signalübertragung bevorzugt zentral innerhalb des Radiallagers bestehend aus dem Radialgleitlager auf der einen Schnittstellenseite und dazu komplementärer Gleitlagerschale der anderen Schnittstellenseite erfolgt durch einen in Axialrichtung der Rotations-Übertragungseinrichtung schmal ausgedehnten Spalt hindurch, wobei der Spalt bevorzugt als ein Fluidspalt, insbesondere ein Luftspalt, ausgebildet ist. Die Schnittstellenseiten sind also über den Spalt hinweg zueinander beabstandet in der Rotations-Übertragungseinrichtung eingerichtet. Der Spalt kann rotationssymmetrisch ausgelegt ist. Es wird so eine mechanisch kontaktlose bzw. berührungsfreie optische Signalübertragung ausgeführt.

Die gegeneinander rotierbaren Schnittstellenseiten können in Axialrichtung eine im Wesentlichen festgelegte Position besitzen, wobei die Schnittstellenseiten in Axialrichtung bevorzugt gegeneinander mechanisch vorgespannt sind. Hierdurch wird gewährleistet, dass sich die Spaltbreite z. B. auch bei Erschütterungen nicht verändert.

Bei der optischen Rotations-Übertragungseinrichtung kann eine Schnittstellenseite eine optomechanische Rotations-Steckeinrichtung aufweisen, welche korrespondierend zu einer optomechanischen Rotations-Gegensteckeinrichtung der anderen Schnittstellenseite ausgebildet ist, wobei die Rotations-Steckeinrichtung und die Rotations-Gegensteckeinrichtung komplementär ausgebildet sind. In einfacher Weise kann so die eine Schnittstellenseite als Stator und die betreffende Schnittstellengegenseite als Rotor fungieren. Dem Stator oder dem Rotor kann das Radialgleitlager zugehörig sein. Des Weiteren kann wenigstens eine Rotations-Steckeinrichtung ein Bestandteil einer übergeordneten technischen Entität sein. Hierbei kann diese Entität z. B. als ein Steckverbinder ausgebildet sein.

Die optische Rotations-Übertragungseinrichtung ist als zylinderförmiges Hohlraumsystem ausgebildet, bei dem zwei außen im Wesentlichen zylinderförmig, innerhalb eines Hohlzylinders rotierbare, optische Einrichtungen angeordnet sind. Die optischen Einrichtungen sind in Form einer Hülse, im Weiteren auch als Ferrule bezeichnet, ausgebildet. Die Rotations-Übertragungseinrichtung weist dabei eine erste optische Ferrule und eine zweite optische Ferrule auf, wobei die zwei Ferrulen jeweils wenigstens abschnittsweise innerhalb einer Radiallagerhülse gegeneinander rotierbar eingerichtet sind.

Das heißt, dass neben den zwei rotierbaren optischen Einrichtungen in dem Hohlzylinder, insbesondere den zwei Ferrulen in der Radiallagerhülse zur Signalübertragung keine zusätzliche optische Vorrichtung wie eine Linse, ein Prisma etc. zur Anwendung kommt. Hierbei ist an der ersten bzw. zweiten Ferrule ein Lichtwellenleiter mechanisch und optisch anschließbar. Der Lichtwellenleiter wird beispielsweise in die Ferrulen gesteckt und verklebt. Eine rotierende Entität kann genau eine oder wenigstens eine Ferrule eines Lichtwellenleiters sein, welcher dabei mitrotiert. Die Ferrulen sind auch als Lichtwellenleiterhülsen bezeichenbar. Bevorzugt ist die Radiallagerhülse als eine Keramikhülse insbesondere auf Zirkoniumbasis ausgebildet. Ferner ist die betreffende Ferrule bevorzugt als eine Keramikferrule, ebenfalls insbesondere auf Zirkoniumbasis ausgebildet.

Ferner sind bei dem vorliegenden Radialgleitlager die wenigstens zwei sich gegeneinander bewegenden Umfangsabschnitte in Umfangsrichtung in einem direkten Kontakt (radialer Formschluss). Sie gleiten aufeinander gegen einen durch eine Gleitreibung verursachten Reibwiderstand. Dieser kann durch eine Wahl einer reibungsarmen Materialpaarung vergleichsweise klein sein.

Die Radiallagerhülse der Rotations-Übertragungseinrichtung weist einen inneren Umlaufbund auf, an welchem wenigstens eine oder beide Ferrulen axial ansitzbar sind (axiallagerbar in jeweils eine translatorische Richtung). Hierbei ist die Radiallagerhülse mit dem inneren Umlaufbund als ein Radiallager für die jeweilige Ferrule ausgebildet, wobei der jeweiligen Ferrule noch ein translatorischer Freiheitsgrad verbleibt, welcher mittels einer Aufnahme für die jeweilige Ferrule unterbindbar ist.

Ferner kann die Radiallagerhülse einen in Axialrichtung der Rotations-Schnittstelle vollständig hindurchgehenden Längsdurchgangsschlitz aufweisen, was der Radiallagerhülse trotz Längssteifigkeit eine gewisse Federbarkeit in Umfangsrichtung verleiht. Des Weiteren kann der Längsdurchgangsschlitz einer Toleranzkompensation dienen.

Die jeweilige Schnittstellenseite oder die jeweilige Rotations-Steckeinrichtung kann eine Aufnahme für die betreffende Ferrule umfassen, wobei die einander betreffenden Ferrulen und Aufnahmen fest miteinander verbunden sind. Bevorzugt ist dabei eine betreffende Ferrule in ihrer betreffenden Aufnahme in allen translatorischen und rotatorischen Richtungen fest aufgenommen; dies betrifft bevorzugt beide Ferrulen in ihren Aufnahmen.

Es kann wenigstens oder genau eine der beiden Aufnahmen das Radialgleitlager aufweisen. Hierbei kann das Radialgleitlager an/in der Aufnahme stofflich einstückig vorgesehen oder an/in der Aufnahme integral ausgebildet sein. Das Radialgleitlager kann neben der betreffenden Ferrule auch als ein drittes Teil ausgebildet sein. Ferner kann das Radialgleitlager oder die Radiallagerhülse zwischen der betreffenden Ferrule und der betreffenden Aufnahme an/in der Aufnahme eingerichtet sein. Bevorzugt ist das Radialgleitlager oder die Radiallagerhülse statorseitig vorgesehen. Des Weiteren kann wenigstens eine Aufnahme gegenüber der betreffenden anderen Aufnahme mittels einer mechanischen Feder vorgespannt in der Rotations-Übertragungseinrichtung eingerichtet sein. Statt einer Feder ist auch ein Elastikelement anwendbar.

In einer alternativen Ausführungsform kann die Rotations-Steckeinrichtung eine erste Linse mit einer erste Linsenaufnahme und die Rotations-Gegensteckeinrichtung eine zweite Linse mit einer zweite Linsenaufnahme aufweist. Die erste Linsenaufnahme und die zweite Linsenaufnahme bilden dann das Radialleitlager und die dazu komplementären Gleitlagerschale. Die optische Signalübertragung mithilfe von Linsen hat reduzierte Anforderungen was die Genauigkeit bei der Ausrichtung betrifft, weshalb eine Radiallagerausgestaltung durch die Linsenaufnahmen ausreicht.

Im Folgenden erläuterte Merkmale eines Armmoduls für einen Roboterarm bzw. eines Industrieroboters sind auch auf die oben erläuterte Rotations-Übertragungseinrichtung anwendbar. Ferner sind oben erläuterte Merkmale der Rotations-Übertragungseinrichtung auch auf ein nachstehend erläutertes Armmodul für einen Roboterarm bzw. einen Industrieroboter anwendbar.

Im Armmodul verbindet ein Gehäuse eine erste Anschlussseite mit einer zweiten Anschlussseite mechanisch. Die zweite Anschlussseite kann dabei rumpfseitig (J-, L- bzw. T-Armmodul) oder ebenfalls stirnseitig (I-Armmodul), in diesem Fall aber gegenüberliegend zur ersten Anschlussseite, am Gehäuse vorgesehen sein. Ferner können hierbei die zwei Anschlussseiten bzw. einander betreffende Anschlussseiten komplementär (Männchen und Weibchen) oder analog ausgebildet sein.

Das Armmodul kann derart ausgebildet sein, dass über die erste Anschlussseite und/oder über die zweite Anschlussseite hinweg, ein optisches Signal, ein elektrisches Signal und/oder ein Fluid mit dem weiteren Armmodul austauschbar ist. Hierbei ist die erste Anschlussseite mechanisch, optisch elektrisch und/oder fluidisch mit der zweiten Anschlussseite verbunden.

Im Armmodul ist die erste Anschlussseite relativ gegenüber der zweiten Anschlussseite um eine Rotationsachse steuerbar verdrehbar ausgelegt. Zwischen der ersten Anschlussseite und der zweiten Anschlussseite kann eine optische Rotations-Übertragungseinrichtung, die in der vorstehend erläuterten Weise ausgebildet ist, für eine optische Signalübertragung zwischen der ersten Anschlussseite und der zweiten Anschlussseite vorgesehen sein. Es kann aber auch alternativ in der ersten Anschlussseite die erste Schnittstellenseite und in der zweiten Anschlussseite die zweite Schnittstellenseite einer optischen Rotations-Übertragungseinrichtung, die in der vorstehend erläuterten Weise ausgebildet ist, angeordnet sein.

Die erste Anschlussseite kann um eine Rotationsachse rotierbar im/am Armmodul eingerichtet sein. Die zweite Anschlussseite kann drehfest am/im Armmodul eingerichtet sein. Hierbei ist das Armmodul bevorzugt derart ausgebildet, dass die erste Anschlussseite relativ gegenüber der zweiten Anschlussseite um die Rotationsachse steuerbar verdreht (vorbestimmter Winkel) werden kann. Die erste und die zweite Anschlussseite können aber auch ihre Plätze tauschen.

Im Gehäuse des Armmoduls kann eine Antriebseinrichtung mittels einer Anschlusseinrichtung der ersten Anschlussseite rotieren. Die Antriebseinrichtung kann z. B. elektrisch oder fluidisch antreibbar ausgebildet sein. Insbesondere ist die Antriebseinrichtung in axialer Richtung angrenzend an die erste Anschlussseite im Gehäuse angeordnet.

Die Antriebseinrichtung kann als Elektromotor mit einem bevorzugt äußeren Stator und einem rotierbar um die Rotationsachse gelagerten, bevorzugt inneren Rotor ausgebildet sein, wobei der Rotor drehmomentschlüssig mit der ersten Anschlussseite bzw. deren Anschlusseinrichtung verbunden ist. Der Stator ist umfangsseitig bevorzugt mittels des Gehäuses umgriffen und drehfest mit diesem verbunden.

Ferner kann die Antriebseinrichtung eine Getriebeeinrichtung aufweisen. Die Getriebeeinrichtung ist bevorzugt axial zwischen dem Rotor und der ersten Anschlussseite bzw. deren Anschlusseinrichtung eingerichtet. Die Getriebeeinrichtung umfasst wenigstens eine Eingangsseite und wenigstens eine Ausgangsseite, wobei die Eingangsseite drehfest mit dem Rotor und die Ausgangsseite drehfest mit der ersten Anschlussseite verbunden sind.

Die Getriebeeinrichtung ist ausgebildet, eine Antriebsdrehzahl des Elektromotors an ihrer Eingangsseite zu einer Abtriebsdrehzahl an ihrer Ausgangsseite bevorzugt zu reduzieren. Die Getriebeeinrichtung weist bevorzugt eine zweite Eingangsseite auf, welche mit dem Gehäuse fest verbunden ist. Insbesondere kann die Getriebeeinrichtung ein Planetengetriebe, ein Exzentergetriebe, ein Zykloidgetriebe oder ein Spannungswellengetriebe umfassen.

Des Weiteren umfasst die Antriebseinrichtung bevorzugt eine (Antriebs-)Hohlwelle und eine Abtriebswelle. Die Hohlwelle und die Abtriebswelle sind jeweils rotierbar um die Rotationsachse gelagert, wobei die Abtriebswelle in der Hohlwelle rotierbar aufgenommen ist. Hierbei ist die Hohlwelle drehfest mit der ersten Eingangsseite der Getriebeeinrichtung verbunden. Ferner ist die Ausgangsseite der Getriebeeinrichtung drehfest mit der Abtriebswelle verbunden. Insbesondere kann der Elektromotor ein Servomotor, ein Gleichstrommotor, ein Steppermotor oder ein Torquemotor sein.

Die Anschlusseinrichtung kann mit der sich in das Gehäuse und die Hohlwelle hinein erstreckenden Abtriebswelle der Antriebseinrichtung drehfest verbunden sein. Die Anschlusseinrichtung kann als eine rotierbare Anschlusseinrichtung (Männchen) ausgebildet sein. Hierbei erstreckt sich die Anschlusseinrichtung, abgesehen von ihrer axialen Länge (Dicke), im Wesentlichen in einer Radialebene des Armmoduls und ist zur mechanischen Befestigung eines weiteren Armmoduls ausgebildet. Die Anschlusseinrichtung der ersten Anschlussseite ist als eine mechanische, optische elektrische und/oder fluidische Anschlusseinrichtung ausgebildet.

Eine Anschlusseinrichtung der zweiten Anschlussseite kann als eine Anschlussbuchse (Weibchen) oder Anschlusseinrichtung (Männchen) ausgebildet sein. Die Anschlusseinrichtung bzw. die Anschlussbuchse der zweiten Anschlussseite ist als eine mechanische, optische elektrische und/oder fluidische Anschlusseinrichtung bzw. Anschlussbuchse ausgebildet. Die Anschlusseinrichtung der ersten Anschlussseite ist mit der Anschlusseinrichtung bzw. der Anschlussbuchse der zweiten Anschlussseite des Armmoduls mechanisch, optisch, elektrisch und/oder fluidisch gekoppelt.

An der ersten Anschlussseite kann die Abtriebswelle die Rotations-Steckeinrichtung aufweisen, wobei die Rotations-Steckeinrichtung wellenfest mit rotierbar ist. Die Rotations-Steckeinrichtung kann dabei gehäusefest gegenüber der Abtriebswelle im Gehäuse eingerichtet sein.

Die Rotations-Steckeinrichtung kann eine erste Aufnahme z. B. in Form eines Rohres, insbesondere ein Messingrohr, aufweisen, an/in welcher die erste optische Ferrule festgelegt ist. In der ersten Aufnahme ist ferner der Lichtwellenleiter aufgenommen. Hierbei kann die Abtriebswelle um die erste Aufnahme und somit um den Lichtwellenleiter herumrotieren, wohingegen die Anschlusseinrichtung der ersten Anschlussseite um die Rotations-Steckeinrichtung herumrotieren kann.

Die erste Aufnahme kann in der Anschlusseinrichtung der ersten Anschlussseite rotationsgelagert, insbesondere gleitgelagert sein. Dabei kann die erste Aufnahme sich in die Abtriebswelle hinein erstrecken oder durch die Abtriebswelle hindurch erstrecken und gehäusefest in der Abtriebswelle eingerichtet sein. Hierbei kann die erste Aufnahme mittelbar oder unmittelbar innen am Gehäuse befestigt sein. Die Abtriebswelle kann um die Aufnahme herum rotieren, wofür die Abtriebswelle eine entsprechende axiale Durchgangsausnehmung aufweist. Es ist auch möglich, die erste Aufnahme und somit den Lichtwellenleiter wellenfest mit rotierbar auszulegen.

Die Rotations-Gegensteckeinrichtung kann eine zweite Aufnahme aufweisen, an/in welcher die zweite optische Ferrule festgelegt ist. Hierbei kann die zweite Aufnahme im Gehäuse gleitgelagert sein.

Im Gehäuse ist ferner bevorzugt eine Rotationsdurchführung eingerichtet, mittels welcher ein Fluid, insbesondere Luft, modulintern rotationsübertragbar ist. Des Weiteren kann im Gehäuse eine Schleifringeinrichtung eingerichtet sein, mittels welcher elektrische Spannung und/oder Energie modulintern rotationsübertragbar ist. Darüber hinaus kann im Gehäuse eine kombinierte Sendeempfangseinheit, auch als Transceiver bezeichnet, eingerichtet sein, durch welchen optische und elektrische Signale jeweils ineinander umwandelbar sind. Die Sendeeinheit und die Empfangseinheit können statt als Transceiver auch getrennt ausgeführt sein. Weiterhin kann im Gehäuse eine Modul-Steuereinheit eingerichtet sein, mittels welcher die Antriebseinrichtung steuerbar/regelbar ist.

Die Vorteile einer optischen Signalübertragung sind neben einer sehr hohen, möglichen Datenrate - derzeit sind bis zu 100 Gbit/s über einen Kanal möglich - auch ein sehr geringer Platzbedarf der Rotations-Übertragungseinrichtung. Ein Singlemode-Lichtwellenleiter ohne eine Ummantelung ist lediglich ca. 0,125 mm dick, mit Ummantelung erhöht sich ein Platzbedarf auf ca. 0,9 mm. Bei einem inneren möglichen Durchmesser der Abtriebswelle von ca. 3 mm ist damit ausreichend Platz für den Lichtwellenleiter vorhanden.

Für eine höhere Datenrate müssen lediglich eine betreffende Sendeeinheit und eine damit kommunizierende Empfangseinheit getauscht werden, der Lichtwellenleiter kann derselbe und somit verlegt bleiben. Hierdurch ist eine einfache Skalierbarkeit für zukünftige Aufgaben gewährleistet, welche mit elektrischen Schleifkontakten nicht möglich wäre. Zum Einrichten eines doppelt gerichteten Betriebs können zwei unterschiedliche Wellenlängen über denselben Lichtwellenleiter übertragen werden.

Ein Industrieroboter mit einem modularen Roboterarm weist eine Mehrzahl von Armmodulen auf, die auf die vorstehende Weise ausgebildet sind. Der Industrieroboter kann dabei eine Roboterbasis, einen/den Roboterarm bzw. eine Mehrzahl von gegeneinander rotierbaren proximalen und distalen Armmodulen, einen Effektor und ggf. eine globale Steuerung umfassen. Bei dem Industrieroboter können neben Armmodulen ein Anfangsmodul, ein Endmodul und/oder einem Effektor ausgebildet sein. Die Rotations-Übertragungseinrichtung kann dabei im Armmodul selbst oder zwischen zwei Armmodulen eingerichtet sein.

Die Erfindung ist im Folgenden anhand von Ausführungsbeispielen unter Bezugnahme auf die beigefügte, schematische und nicht maßstabsgetreue Zeichnung näher erläutert. Abschnitte, Elemente, Bauteile, Einheiten, Komponenten und/oder Schemata, welche eine identische, univoke oder analoge Ausbildung und/oder Funktion besitzen, sind in der Figurenbeschreibung, der Bezugszeichenliste, den Patentansprüchen und in den Figuren der Zeichnung mit denselben Bezugszeichen gekennzeichnet. Eine mögliche, in der Beschreibung nicht erläuterte, in der Zeichnung nicht dargestellte und/oder nicht abschließende Alternative, eine statische und/oder kinematische Umkehrung, eine Kombination etc. zu den Ausführungsbeispielen der Erfindung bzw. einer Komponente, einem Schema, einer Einheit, einem Bauteil, einem Element oder einem Abschnitt davon, kann ferner der Bezugszeichenliste und/oder der Figurenbeschreibung entnommen werden.

Bei der Erfindung kann ein Merkmal positiv, d. h. vorhanden, oder negativ, d. h. abwesend, ausgestaltet sein, wobei ein negatives Merkmal als Merkmal nicht explizit erläutert ist, wenn nicht gemäß der Erfindung Wert daraufgelegt ist, dass es abwesend ist, also die tatsächlich gemachte und nicht eine durch den Stand der Technik konstruierte Erfindung darin besteht, dieses Merkmal wegzulassen.

Die Merkmale der Beschreibung sind auch als optionale Merkmale interpretierbar; d. h. ein jedes Merkmal kann als ein fakultatives, arbiträres oder bevorzugtes, also als ein nicht verbindliches, Merkmal aufgefasst werden. So ist eine Herauslösung eines Merkmals, ggf. inkl. seiner Peripherie, aus einem Ausführungsbeispiel möglich, wobei dieses Merkmal dann auf einen verallgemeinerten Erfindungsgedanken übertragbar ist. Das Fehlen eines Merkmals in einem Ausführungsbeispiel zeigt, dass das Merkmal in Bezug auf die Erfindung optional ist.

In den Figuren zeigen:
Fig. 1 in einer dreidimensionalen Seitenansicht einen Industrieroboter mit einem modularen, sechsachsigen Roboterarm;
Fig. 2 in einer Perspektivansicht von schräg oben, ein aktives Armmodul für einen Roboterarm aus Fig. 1;
Fig. 3 in einer zentral geschnittenen, zweidimensionalen Seitenansicht zwei miteinander verbundene aktive Armmodule des Industrieroboters gemäß Fig. 1, mit einer ersten Ausführungsform einer optischen Rotations-Übertragungseinrichtung;
Fig. 4 ein Ersatzschaltbild einer generischen Form einer optomechanischen Rotations-Schnittstelle;
Fig. 5 ein Ersatzschaltbild einer Ausführungsform der optomechanischen Rotations-Schnittstelle aus Fig. 4;
Fig. 6 die Rotations-Übertragungseinrichtung aus Fig. 3 in einer radialen und auf beiden Längsseiten weggebrochenen Detailansicht;
Fig. 7 in einer zentral geschnittenen, zweidimensionalen Seitenansicht ein aktives Armmodul aus Fig. 3;
Fig. 8 in einer zentral geschnittenen, zweidimensionalen Seitenansicht ein aktives Armmodul des Industrieroboters aus Fig. 1, mit einer zweiten Ausführungsform einer optischen Rotations-Übertragungseinrichtung;
Fig. 9 die Rotations-Übertragungseinrichtung aus Fig. 8 in einer radialen und auf beiden Längsseiten weggebrochenen Detailansicht;
Fig. 10 in einer Perspektivansicht eine Ausführungsform einer Radiallagerhülse für die Rotations-Übertragungseinrichtung;
Fig. 11 in einer zentral geschnittenen, zweidimensionalen Ansicht die Radiallagerhülse aus Fig. 10;
Fig. 12 in einer zentral geschnittenen, zweidimensionalen Seitenansicht zwei miteinander verbundene aktive Armmodule des Industrieroboters gemäß Fig. 1, mit einer dritten Ausführungsform einer optischen Rotations-Übertragungseinrichtung; und
Fig. 13 eine vergrößerte Darstellung des Bereichs X aus Fig. 12.

Die Erfindung ist im Folgenden anhand von Ausführungsbeispielen von Varianten einer optischen Rotations-Übertragungseinrichtung für Ausführungsformen eines modularen Roboterarms für einen Industrieroboter näher erläutert. Obwohl die Erfindung detaillierter durch die Ausführungsbeispiele näher beschrieben und illustriert ist, so ist die Erfindung nicht durch die offenbarten Ausführungsbeispiele, sondern lediglich durch den beiliegenden Anspruchssatz eingeschränkt.

In der Zeichnung sind nur diejenigen räumlichen Abschnitte eines Gegenstands der Erfindung dargestellt, welche für ein Verständnis der Erfindung notwendig sind. Ferner bezieht sich die Erläuterung der Erfindung im Folgenden auf ein polares Koordinatensystem mit einer Axialrichtung Ar, einer Radialrichtung Rr und einer Umfangsrichtung Ur. Eine Rotationsachse Ra eines bestimmten Armmoduls ist dabei koaxial oder parallel zu einer dieses Armmodul betreffenden Axialrichtung Ar.

Zwei prinzipielle Bauformen von optischen Rotationsübertragern sind die sogenannten axialen (on-axis) Bauformen sowie die sogenannten nicht-axialen (off-axis) Bauformen. Axiale optische Rotationsübertrager sind in ihrem Aufbau einfacher als nicht-axiale Bauformen, müssen jedoch auf einer Rotationsachse Ra liegen. Es gibt unterschiedliche Bauformen, sowohl mit als auch ohne optische Komponenten wie Linsen oder Prismen, wobei eine Strahlführung mit Prismen vor allem für Mehrkanal-Lösungen angewendet wird. Soll nur ein optischer Gang übertragen werden, so kann auf Prismen verzichtet werden.

Bei einem Aufbau eines typischen axialen optischen Einkanal-Rotationsübertragers ist, um eine gute optische Kopplung zwischen den beiden Lichtwellenleitern für einen optischen Gang zu gewährleisten, eine genaue Ausrichtung der beiden Endabschnitte der Lichtwellenleiter zueinander notwendig. Der Abstand zwischen den Längsenden der Lichtwellenleiter soll dabei gering sein, wobei sich die Längsenden der Lichtwellenleiter nicht berühren dürfen, um einen mechanischen Abrieb zu vermeiden.

Es soll eine Hochgeschwindigkeits-Signalübertragung zwischen zwei relativ zueinander rotierbaren Armmodulen eines Roboterarms eines Industrieroboters realisiert sein. Hierbei sollen die Armmodule über steckbare und/oder schraubbare Kontaktierungen miteinander verbindbar sein. Eine Einrichtung zur Signalübertragung muss deshalb ebenfalls steckbar sein und einen Rotationsübertrager umfassen.

Eine erzielbare Datenrate der Signalübertragung soll für eine EtherCAT- und/oder eine Gigabit-Ethernet-Verbindung wenigstens ausreichen, d. h. die erzielbare Datenrate sollte mindestens 1,1 Gbit/s betragen. Je nach Ausführungsform sind jedoch auch geringere Datenraten der Signalübertragung einsetzbar. Der Rotationsübertrager soll robust sein und in einem industriellen Umfeld seine Funktionsfähigkeit aufrechterhalten können. Dabei soll eine Echtzeitfähigkeit von EtherCAT nicht beeinträchtigt sein. Gleichzeitig soll der Rotationsübertrager kostengünstig und platzsparend sein, da die einzelnen Armmodule kompakt und zu einem kompetitiven Preis angeboten werden sollen.

Für die Signalübertragung haben sich optische Signale, die durch einen Lichtwellenleiter geführt werden, als eine wenigstens sehr gute Möglichkeit erwiesen. Als Transceiver sollen sogenannte SFP-Module (SFP: small form-factor pluggable) eingesetzt werden, welche als Signalkonverter zwischen elektrischen und optischen Signalen und vice versa fungieren. Ein optischer Rotationsübertrager ist zwischen den Armmodulen einrichtbar, um die Vorgabe einer beliebigen Rotierbarkeit der Armmodule untereinander realisieren zu können. Hierfür existieren sogenannte Multimode- und Singlemode-Lichtwellenleiter zur Führung bzw. Übertragung der optischen Signale. Für hohe Datenraten haben sich Singlemode-Lichtwellenleiter bewährt, da sie eine wesentlich geringere Dämpfung, d. h. verschwindend kleine Modendispersion aufweisen, welche vorliegend bevorzugt Anwendung finden.

Ferner muss bei optischen Rotationsübertragern berücksichtigt sein, dass ein optisches Signal aufgrund des Luftspalts gedämpft wird. Bei kommerziellen Rotationsübertragern wird ein Verlust von durchschnittlich ca. 2 dB bis ca. 3 dB angegeben. Diese Dämpfung ist auf Grund von Toleranzen über eine vollständige Umdrehung hinweg nicht konstant, sondern kann um bis zu 1 dB variieren.

Trotz dieser Nachteile ist eine optische Signalübertragung eine sehr geeignete Methode für die eingangs genannte Aufgabenstellung. Jedoch sind herkömmliche optische Rotationsübertrager sowohl zu groß als auch zu kostenintensiv, um für einen Einsatz in einem Roboterarm bzw. einem Industrieroboter bzw. für einzelne Armmodule davon in Frage zu kommen. Die Erfindung löst diese Aufgabe für einen Industrieroboter bzw. einen Roboterarm bzw. für einzelne Armmodule davon.

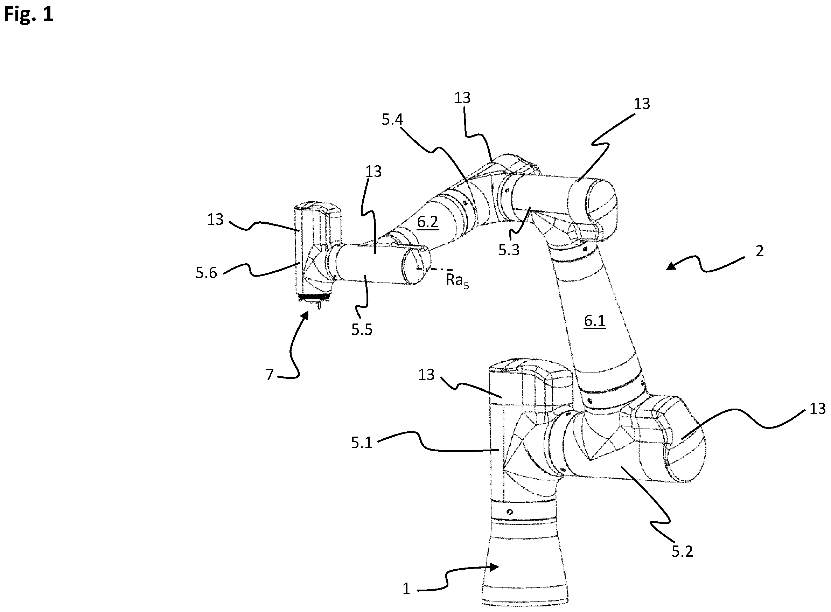

In der Fig. 1 ist beispielhaft eine Ausführungsform einer Variante eines Roboterarms 2 eines Industrieroboters dargestellt, welcher auch als Handhabungsroboter oder Arbeitsmaschine bezeichenbar ist. Ein Industrieroboter ist eine automatische Maschine mit mehreren Freiheitsgraden für die Automatisierungstechnik, welcher durch eine vorprogrammierte Steuerung/Regelung verschiedene Funktionen in einer Arbeitsumgebung in (bedingter) Eigenleistung durchführen kann. Der Industrieroboter umfasst eine Roboterbasis 1, den Roboterarm 2 und einen bevorzugt auswechselbaren (End-)Effektor (nicht gezeigt), auch als Roboterhand bezeichenbar, mit z. B.: einem Werkzeug, einem Greifer etc., welcher an einem distalen Ende 7 des Roboterarms 2 anordenbar oder angeordnet ist.

Der Roboterarm 2 besitzt zwei bis sechs Bewegungsachsen. In der Ausführungsform in der Fig. 1 sind sechs rotatorische Freiheitsgrade vorgesehen. Es lassen sich dabei eine beliebige Anzahl von vollständigen und teilweisen Umdrehungen eines betreffenden Armmoduls des Roboterarms 2 in beide Umfangsrichtungen einer betreffenden Rotationsachse durchführen. Es ist möglich, eine jeweilige Rotationsachse auch als eine Schwenkachse oder Drehachse auszubilden, d. h. eine Bewegung des betreffenden Armmoduls auf einen bestimmten Winkel zu beschränken, wie z. B. auf Winkel kleiner als: 720°, 540°, 360°, 270°, 180°, 90° oder 45°.

Einem Armmodul bzw. einer jeweiligen Rotationsachse Raₙ des Armmoduls können Sensoren (in Fig. 1 nicht gezeigt) zugeordnet sein, deren Daten für eine Steuerung/ Regelung des entsprechenden Armmoduls bzw. des Roboterarms 2 verwendet werden können. Es können z.B. ein Kraft- und/oder Drehmomentsensor sowie ein Positionssensor vorgesehen sein, mit welchen eine Kraft und/oder ein Drehmoment auf das Armmodul sowie eine Position des Armmoduls erfassbar sind. Dies ist ggf. auch auf einen Abschnitt oder einen Längsendabschnitt des Roboterarms 2 beschränkbar.

Der vorliegende Roboterarm 2 des Industrieroboters ist insbesondere modular mit einer Mehrzahl von Armmodulen aufgebaut. Prinzipiell sind die Armmodule beliebig auslegbar, wobei, wie in der Fig. 1 gezeigt, zwischen aktiven Armmodulen 5 und passiven Armmodulen 6 unterschieden werden kann. Ein aktives Armmodul 5 besitzt eine Antriebseinrichtung 13, mittels welcher ein daran anschließbares weiteres Armmodul geschwenkt, gedreht und/oder rotiert werden kann. Analog dazu weist ein passives Armmodul 6 keine Antriebseinrichtung auf.

Vorliegend weist ein bestimmter Modulbaukasten für einen Roboterarm 2 wenigstens einen Typ eines aktiven Armmoduls 5 in J-Form und ggf. wenigstens einen Typ eines passiven Armmoduls 6 in I-Form, jeweils mit stirn- und/oder längs-/rumpfseitigen und jeweils zueinander mechanisch komplementären oder mechanisch analogen Anschlüssen auf. Statt einer J-Form für das aktive Armmodul 5 bzw. einer I-Form für das passive Armmodul 6 sind ggf. andere geometrische Formen anwendbar.

Abgesehen von der Roboterbasis 1 und/oder einem Effektor am distalen Ende 7, sind bevorzugt sämtliche Armmodule solch eines Modulbaukastens für Roboterarme 2 derart ausgebildet, dass immer zwei Anschlüsse zweier Armmodule miteinander korrespondieren und miteinander verbunden werden können. D. h. eine erste Anschlussseite eines beliebigen Armmoduls des Modulbaukastens ist an einer zweiten Anschlussseite eines beliebigen weiteren Armmoduls dieses Modulbaukastens anschließbar, bzw. vice versa. Bevorzugt besitzen die erste Anschlussseite und die zweite Anschlussseite des Armmoduls jeweils eine einheitliche, komplementäre Kontaktierungsmimik, die eine Kompatibilität der Armmodule über betreffende, insbesondere alle, Baureihen des Modulbaukastens hinweg sicherstellt.

In der Fig. 1 sind die aktiven Armmodule 5 und die passiven Armmodule 6 zur Unterscheidung jeweils mit einer Zusatznummer getrennt durch einen Punkt versehen, wobei ausgehend von der Roboterbasis 1 in Richtung auf das distalen Ende 7 nummeriert ist. Bei dem Roboterarm 2 in der Ausführung gemäß der Fig. 1 ist ein erstes aktives Armmoduls 5.1 mit der Roboterbasis 1 an der ersten Anschlussseite verbunden. An die zweite Anschlussseite des ersten aktiven Armmoduls 5.1 ist die erste Anschlussseite eines zweiten aktiven Armmoduls 5.2 angeschlossen. Zwischen dem zweiten aktiven Armmodul 5.2 und einem dritten aktiven Armmodul 5.3 ist ein erstes passives Armmodul 6.1 angeordnet, das die zweite Anschlussseite des zweiten aktiven Armmoduls 5.2 mit der zweiten Anschlussseite des dritten aktiven Armmoduls 5.3 verbindet. An der ersten Anschlussseite des dritten aktiven Armmoduls 5.3 ist die zweite Anschlussseite eines vierten aktiven Armmoduls 5.4 angeschlossen. Die erste Anschlussseite des vierten aktiven Armmoduls 5.4 ist über ein zweites passives Armmoduls 6.2 mit der zweiten Anschlussseite eines fünften aktiven Armmoduls 5.5 verbunden. An die erste Anschlussseite des fünften aktiven Armmoduls 5.5 ist die zweite Anschlussseite eines sechsten aktiven Armmoduls 5.6 angeschlossen, dessen erste Anschlussseite dann das distale Ende 7 des Roboterarms 2 bildet.

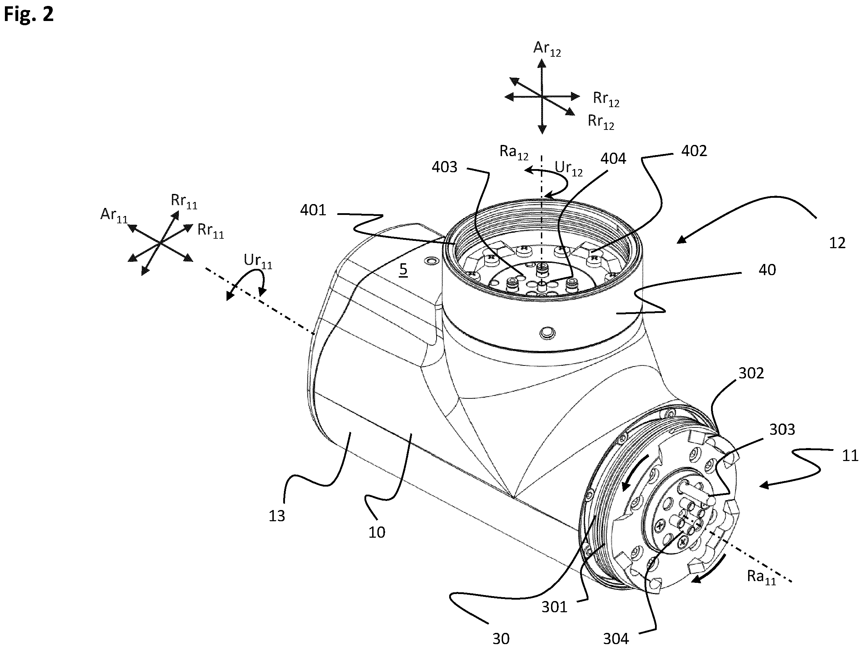

In der Fig. 2 ist in einer Perspektivansicht von schräg oben, beispielhaft ein aktives Armmodul 5 für den Roboterarm 2 aus der Fig. 1 gezeigt. Dabei verbindet ein Gehäuse 10 in J-Form die erste Anschlussseite 11 mit der zweiten Anschlussseite 12 mechanisch. Für die erste Anschlussseite 11 und die zweite Anschlussseite 12 ist jeweils ein polares Koordinatensystem mit einer Axialrichtung Ar, einer Radialrichtung Rr und einer Umfangsrichtung Ur angezeigt, die jeweils mit einem entsprechenden Index für die zugeordnete Anschlussseite versehen sind. Weiterhin ist für jede Anschlussseite eine zugeordnete Rotationsachse Ra mit dem entsprechenden Index dargestellt.

Die erste Anschlussseite 11 des aktiven Armmoduls 5 ist mechanisch, optisch, elektrisch und/oder fluidisch mit der zweiten Anschlussseite eines weiteren Armmoduls (nicht gezeigt) koppelbar. Ferner ist die zweite Anschlussseite 12 des aktiven Armmoduls 5 mechanisch, optisch, elektrisch und/oder fluidisch mit der ersten Anschlussseite eines weiteren Armmoduls (nicht gezeigt) koppelbar. Hierbei ist die erste Anschlussseite 11 des aktiven Armmoduls 5 bevorzugt rotierbar am aktiven Armmodul 5 vorgesehen, wobei die zweiten Anschlussseite 12 dann fest am aktiven Armmodul 5 eingerichtet ist. Die Festlegung von rotierbarer und nicht-rotierbarer Anschlussseite kann aber auch genau umgekehrt sein. Bei einem passiven Armmodul 6 in der Fig. 1 sind sowohl die erste Anschlussseite als auch die zweite Anschlussseite starr an einem I-förmigen Gehäuse ausgeführt. Die erste Anschlussseite und die zweite Anschlussseite der aktiven und der passiven Armmodulen sind korrespondierend zueinander ausgebildet.

Bei dem in der Fig. 2 gezeigten Armmodul 5 weist die erste Anschlussseite 11 eine erste rotierbare Anschlusseinrichtung 30 und die zweite Anschlussseite 12 eine gehäusefeste zweite Anschlusseinrichtung 40 auf.

Die rotierbare erste Anschlusseinrichtung 30, die sich senkrecht zur Rotationsachse Ra₁₁ der erste Anschlussseite 11 erstreckt, ist kreisförmig in der Draufsicht ausgebildet und drehbar am Gehäuse 10 angeordnet. An einer äußeren Umfangsseite der ersten Anschlusseinrichtung 30 ist ein Außengewinde 301 angebracht. Die ersten Anschlusseinrichtung 30 weist eine vier Zähne aufweisende erste Stirnverzahnung 302 auf, die als Hirth-Verzahnung ausgebildet ist. Weiter ist eine Zentrierstift 303 auf der ersten Anschlusseinrichtung 30 vorgesehen. Die ersten Anschlusseinrichtung 30 umfasst zudem eine erste Kontakteinrichtung 304, die optische, elektrische und/oder fluidische Schnittstellen beinhaltet.

Die gehäusefeste zweite Anschlusseinrichtung 40, die auch kreisförmig in der Draufsicht ausgebildet ist, ist senkrecht zur Rotationsachse Ra₁₂ der ersten Anschlussseite 12 ausgerichtet und drehfest mit dem Gehäuse 10 verbunden. Umfangsseitig weist die zweite Anschlusseinrichtung 40 einen Befestigungsring 401 mit einem Innengewinde auf, wobei das Innengewinde korrespondierend zu dem Außengewinde 301 der ersten Anschlusseinrichtung 30 ausgebildet ist.

Die zweite Anschlusseinrichtung 40 umfasst weiter eine vier Zähne aufweisende zweite Stirnverzahnung 402 auf, die als Hirth-Verzahnung ausgebildet ist und komplementär zu den der ersten Stirnverzahnung 302 der ersten Anschlusseinrichtung 30 ausgebildet ist. In der zweiten Anschlusseinrichtung 40 ist zudem eine Zentieraufnahme 403 vorgesehen, die mit dem Zentrierstift 303 der ersten Anschlusseinrichtung 30 korrespondiert. Die zweite Anschlusseinrichtung 40 weist ferner eine zweite Kontakteinrichtung 404 auf, die optische, elektrische und/oder fluidische Schnittstellen beinhaltet, die komplementär zu den die optische, elektrische und/oder fluidische Schnittstellen der ersten Kontakteinrichtung 304 der ersten Anschlusseinrichtung 30 ausgebildet sind.

Bei Zusammenbau des Roboterarm 2, wie er in der Fig. 1 gezeigt ist, wird die erste Anschlusseinrichtung 30 eines aktiven Armmoduls 5 auf die die zweite Anschlusseinrichtung 40 eines ersten weiteren aktiven Armmoduls 5 aufgesetzt. Dabei greift der Zentrierstift 303 in die Zentrieraufnahme 403 ein. Durch Verdrehung des Befestigungsrings 401 wird das Innengewinde auf das Außengewinde 301 aufgeschraubt, wodurch die zweite Anschlusseinrichtung 40 auf die erste Anschlusseinrichtung 30 gepresst wird. Im angepressten Zustand greifen die erste Stirnverzahnung 302 und die zweite Stirnverzahnung 402 dann derart ineinander ein, dass die erste Anschlusseinrichtung 30 und die zweite Anschlusseinrichtung 40 drehmomentschlüssig miteinander verbunden sind. Ferner kontaktiert die erste Kontakteinrichtung 303 die zweite Kontakteinrichtung 403, sodass eine Übertragung zwischen den beiden Kontakteinrichtungen über deren Schnittstellen sichergestellt ist.

Die Montage wurde beispielhaft für zwei aktive Armmodule 5 des Roboterarms 2 in der Fig. 1 erläutert. Der Anbau von passiven Armmodulen 6 erfolgt auf die gleiche Weise. Durch die Verbindung der ersten Anschlusseinrichtung 30 mit der zweiten Anschlusseinrichtung 40 sind benachbarte Armmodule mechanisch befestigt. Weiterhin kann auch eine optische, elektrische und/oder fluidische Verbindung zur Übertragung von optischen Signalen, elektrischen Signalen und/oder des Fluids bereitgestellt werden.

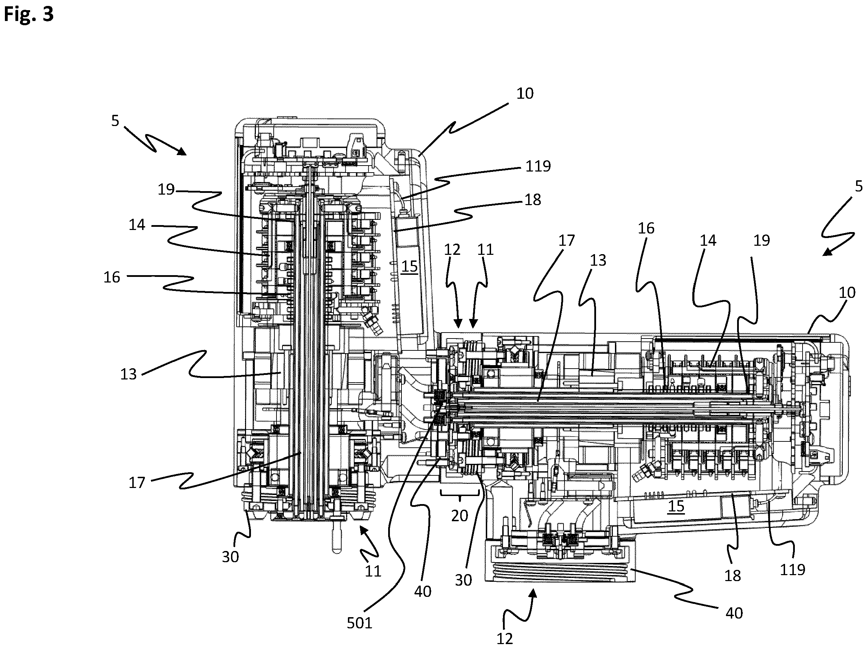

Die Fig. 3 zeigt in einer zentral geschnittenen, zweidimensionalen Seitenansicht, zwei miteinander verbundene aktive Armmodule 5 des Industrieroboters gemäß der Fig. 1 in einer ersten Ausführungsform. Die beiden aktiven Armmodule 5 sind dabei mit der ersten Anschlussseite 11 und der zweite Anschlussseite 12 versehen, die in Fig. 2 gezeigt ist. Die beiden Armmodule 5 sind identisch aufgebaut, weshalb für die Bestandteile der beiden Armmodule dieselben Bezugszeichen verwendet werden. Aus Gründen der Übersichtlichkeit wurde auf eine Schraffur der Schnittflächen verzichtet.

Die einander zugewandten ersten und zweiten Anschlussseiten 11, 12 der zwei Armmodule 5 konstituieren eine mechanische Schnittstelle 20, wobei die rotierbare erste Anschlusseinrichtung 30 der ersten Anschlussseite 11 und die gehäusefeste zweite Anschlusseinrichtung 40 der zweiten Anschlussseite 12 aufeinander liegen und in der vorstehend erläuterten Weise montiert wurden.

Im Gehäuse 10 des aktiven Armmoduls 5 ist die Antriebseinrichtung 13 eingerichtet, wobei die Antriebseinrichtung 13 bevorzugt ein Elektromotor und gegebenenfalls eine Getriebeeinrichtung aufweist. Zwischen dem Elektromotor und der Getriebeeinrichtung befindet sich bevorzugt eine Wellenanordnung 19 der Antriebseinrichtung 13, mit einer insbesondere vergleichsweise schnell rotierbaren Hohlwelle, in welcher eine insbesondere vergleichsweise langsam rotierbare Abtriebswelle 17 eingerichtet ist.

Der Elektromotor treibt mit einer Abtriebsdrehzahl die schnelle Hohlwelle als Eingangswelle der Getriebeeinrichtung an. Ein Ausgang der Getriebeeinrichtung ist bevorzugt drehfest mit der langsamen Abtriebswelle 17 verbunden. Die Abtriebswelle 17 wiederum ist mit der erste Anschlusseinrichtung 30 der ersten Anschlussseite 11 drehfest verbunden und erstreckt sich ausgehend von dieser in die Hohlwelle hinein und bevorzugt auch durch diese hindurch, wobei sie bevorzugt rotationsgelagert ist.

Mithilfe der Abtriebswelle 17 sind die erste Anschlussseite 11 und die zweite Anschlussseite 12 innerhalb des aktiven Armmoduls 5 optisch, elektrisch und/oder fluidisch miteinander verbunden. Die Abtriebswelle 17 fungiert auch als ein Teilnehmer bzw. Abschnitt einer optischen, elektrischen und/oder fluidischen Rotationsübertragung innerhalb des aktiven Armmoduls 5.

Das aktive Armmodul 5 weist, wie in der Fig. 3 gezeigt, zwischen dem Gehäuse 10 und der Abtriebswelle 17 eine mit dem Gehäuse 10 fest verbundene Schleifringeinrichtung 14 für eine Rotationsübertragung von elektrischer Spannung und/oder Energie auf die erste Anschlussseite 11 auf. Ferner umfasst das aktive Armmodul 5, wie weiter in der Fig. 3 gezeigt, eine Rotationsdurchführung 16 für eine Rotationsübertragung eines Fluids, welche einen fluidgedichteten Übergang zwischen einem feststehenden Abschnitt und einem rotierbaren Abschnitt des aktiven Armmoduls 5 sicherstellt. Hierbei kann die Rotationsdurchführung 16 wenigstens teilweise in der Schleifringeinrichtung 14 eingerichtet sein bzw. ferner die Schleifringeinrichtung 14 rotationslagern bzw. vice versa. Eine solche radiale Anordnung ist platzsparend und ermöglicht eine kleine Gesamtgröße.

Ferner weist das aktive Armmodul 5 eine elektronische Modul-Steuereinheit 18 u. a. zum Ansteuern der Antriebseinrichtung 13 auf. Die Modul-Steuereinheit 18 erhält ihre Steuerdaten von einem bevorzugt auf einer Platine der Modul-Steuereinheit 18 vorgesehenen Transceiver 15, welcher auch als Sendeempfangseinheit bezeichenbar und bevorzugt als ein bidirektionales SFP-Modul ausgebildet ist. Ein integrierter Schaltkreis des Transceivers 15 bereitet einerseits empfangene Signale von seiner Fotodiode elektrisch auf und leitet sie weiter, und wandelt andererseits empfangene elektronische Signale in geeignete optische Pulse für seinen Laser um. Solche SFP-Module sind Standard in der Netzwerktechnik.

Die Transceiver 15 der Modul-Steuereinheiten 18 der zwei benachbarten aktiven Armmodule 5 kommunizieren über Lichtwellenleiter 119, von den in Fig. 3 kurze Abschnitte gezeigt sind, optisch miteinander. Die Lichtleiter 119 verbinden dabei jeweils auch die ersten und zweiten Anschlussseiten 11, 12 innerhalb des Gehäuses 10 mit dem jeweiligen Transceiver 15 des aktiven Armmoduls 5. Die optische Übertragungsstrecke im Gehäuse 10 des aktive Armmoduls 5 verläuft von der ersten Anschlussseite 11 über den Lichtleiter 119, der zuerst in der Abtriebswelle 17 angeordnet (nicht gezeigt) und dann aus der Abtriebswelle 17 herausgeführt ist, zum Transceiver 15 und vom dem Transceiver 15 weiter über den Lichtleiter 119 zu der zweiten Anschlussseite 12. Die optische Datenübertragung kann dabei bidirektional erfolgen.

Aufgrund der gegenseitigen Rotierbarkeit der beiden aktiven Armmodule 5 ist zwischen den zu den beiden Transceivern 15 führenden Lichtleitern 119 eine erste optische Rotations-Übertragungseinrichtung 501 eingerichtet, die sich, wie die Fig. 3 zeigt, im Bereich der mechanische Schnittstelle 20 befindet. Somit erfolgt eine Kommunikation zwischen zwei Transceivern also von einem Transceiver 15, über den Lichtwellenleiter 119, über die erste optische Rotations-Übertragungsvorrichtung 501 mit dem Spalt 312 und nochmals über einen Lichtwellenleiter 119 in den anderen Transceiver 15 und umgekehrt.

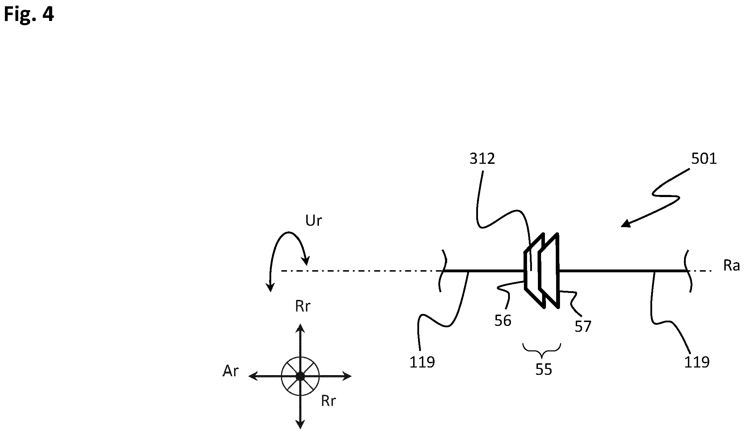

Im Folgenden wird anhand der Fig. 4 eine generische Form der ersten optischen Rotations-Übertragungseinrichtung 501 aus der Fig. 3 näher erläutert. In der Fig. 4 ist ein polares Koordinatensystem mit einer Axialrichtung Ar, einer Radialrichtung Rr, einer Umfangsrichtung Ur und einer zugeordneten Rotationsachse Ra zur Verdeutlichung der Orientierung der einzelnen Bauelemente angezeigt.

Die erste optische Rotations-Übertragungseinrichtung 501 umfasst eine optomechanische Rotations-Schnittstelle 55 mit einer ersten optomechanischen Schnittstellenseite 56 und einer zweiten optomechanischen Schnittstellenseiten 57, die einander zugewandt sind. Die erste Schnittstellenseite 56 ist an den Lichtleiter 119 des aktiven Armmoduls 5 in der Fig. 3 und die zweite Schnittstellenseite 57 an den Lichtleiter 119 des anderen aktiven Armmoduls 5 in der Fig. 3 angeschlossen. Die erste Schnittstellenseite 56 und die zweite Schnittstellenseite 57 sind bevorzugt jeweils im Wesentlichen rotationssymmetrisch und bevorzugt zueinander komplementär ausgebildet, d. h. schnittstellenkomplementär und/oder rotationskomplementär ausgelegt.

Hierdurch sind die erste Schnittstellenseite 56 und die zweite Schnittstellenseite 57 gegeneinander um die Rotationsachse Ra rotierbar in der Rotations-Schnittstelle 55 eingerichtet, wobei die ersten und zweiten Schnittstellenseiten 56, 57 gegenseitig bzw. untereinander mechanisch radialgleitgelagert sind. Dies erfolgt mittels eines hier nicht dargestellten Radialgleitlagers auf einer Schnittstellenseite und einer dazu komplementären, hier ebenfalls nicht dargestellten Gleitlagerschale auf der Schnittstellengegenseite, wobei zwischen der ersten Schnittstellenseite 56 und der zweite Schnittstellenseite 57 in Axialrichtung Ar ein Spalt 312 ausgebildet ist. Die optische Signalübertragung erfolgt über den Spalt 312 hinweg.

Die gegeneinander rotierbaren ersten und zweiten Schnittstellenseiten 56, 57 besitzen in Axialrichtung Ar eine im Wesentlichen festgelegte Position, wobei die erste Schnittstellenseite 56 und die zweite Schnittstellenseite 57 in Axialrichtung Ar gegeneinander mechanisch vorgespannt sein können.

Der Spalt 312 ist dabei der ersten optischen Rotations-Übertragungseinrichtung 501 aus der Fig. 3 in der mechanischen Schnittstelle 20 zwischen der rotierbaren Anschlusseinrichtung 30 des einen aktiven Armmoduls 5 und der gehäusefesten Anschlusseinrichtung 40 des anderen aktiven Armmoduls 5 lokalisiert. Grundsätzlich ist es aber möglich, die Rotations-Schnittstelle 55 ohne eine solche mechanische Schnittstelle 20 auszubilden oder die mechanische Schnittstelle 20 abseits einer solchen vorzusehen, d. h. als versetzte Anordnung der Rotations-Schnittstelle 55 gegenüber der eigentlichen mechanischen Schnittstelle 20. Der Spalt 312 befindet sich dann auch nicht im Bereich der mechanischen Schnittstelle 20.

Die erste Schnittstellenseite 56 kann dabei durch eine optomechanische Rotations-Steckeinrichtung konstituiert sein. Die zweite Schnittstellenseite 57 kann dabei durch eine Rotations-Gegensteckeinrichtung konstituiert sein. Dabei bildet die Rotations-Steckeinrichtung das Radialgleitlager und die Rotations-Gegensteckeinrichtung und die zum Radialgleitlager komplementäre Gleitlagerschale.

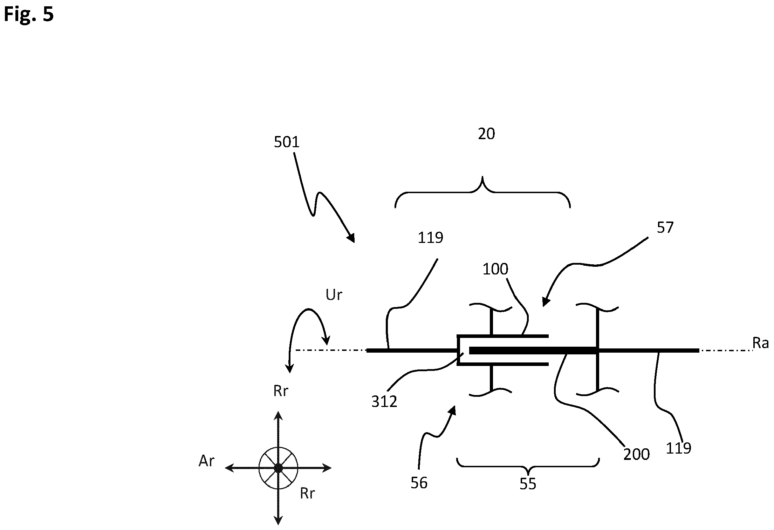

In der Fig. 5 ist eine mögliche Ausgestaltung der Rotations-Übertragungseinrichtung gezeigt, die in der Fig. 4 in generischer Form erläutert ist. In der Fig. 5 ist wiederum das polare Koordinatensystem aus der Fig. 4 mit der Axialrichtung Ar, der Radialrichtung Rr, der Umfangsrichtung Ur und der zugeordneten Rotationsachse Ra zur Verdeutlichung der Orientierung der einzelnen Bauelemente angezeigt.

Die erste optische Rotations-Übertragungseinrichtung 501 gemäß der Fig. 5 weist eine buchsenartige Rotations-Steckeinrichtung 100 auf, in der eine stiftartige Rotations-Gegensteckeinrichtung 200 teilweise aufnehmbar bzw. vice versa ist. Hierbei ist in der eingerichteten, z. B. lösbar zusammengesteckten ersten optischen Rotations-Übertragungseinrichtung 501 die Rotations-Gegensteckeinrichtung 200 als Gleitlagerschale in der Rotations-Steckeinrichtung 100 als Radialgleitlager vorgesehen, d. h. gleitgelagert.

Die optische Signalübertragung zwischen der ersten Schnittstellenseite 56 und der zweite Schnittstellenseite 57 erfolgt über den Spalt 312 hinweg, der zwischen der Rotations-Steckeinrichtung 100 und der Rotations-Gegensteckeinrichtung 200 in Axialrichtung Ar ausgebildet ist. Die Rotations-Steckeinrichtung 100 und die Rotations-Gegensteckeinrichtung 200 sind zueinander schnittstellenkomplementär und rotationskomplementär ausgebildet, sodass diese gegeneinander schwenken, drehen und rotieren können. Hierbei kann die Rotations-Steckeinrichtung 100 oder die Rotations-Gegensteckeinrichtung 200 ortsfest bzw. gehäusefest sein. Es ist auch möglich, die Rotations-Steckeinrichtung 100 und die Rotations-Gegensteckeinrichtung 200 als Rotoren auszubilden.

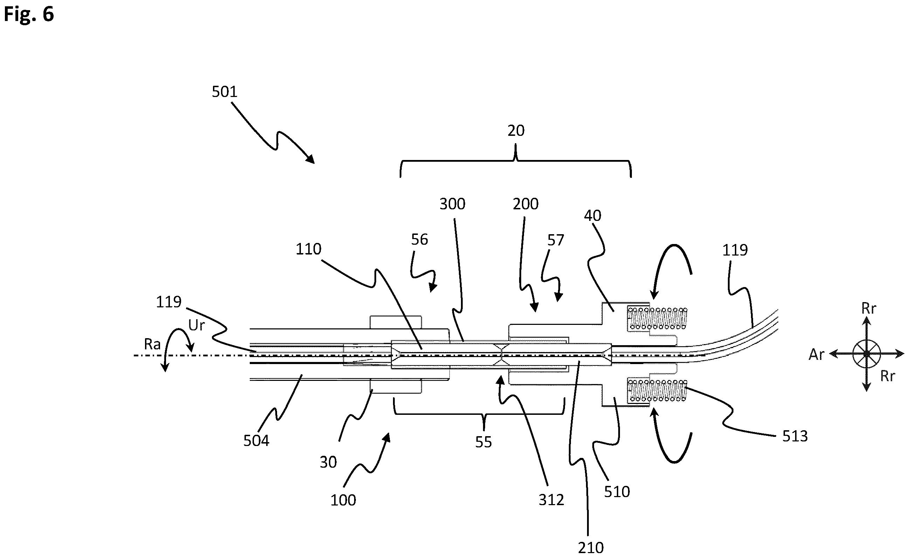

Im Folgenden wird anhand der Fig. 6 eine vergrößert dargestellte Ausführungsform der ersten optischen Rotations-Übertragungseinrichtung 501 aus der Fig. 3 näher erläutert, die auf der in der Fig. 4 und der Fig. 5 gezeigten allgemeinen Form der ersten optischen Rotations-Übertragungseinrichtung 501 aufbaut. In der Fig. 6 ist auch das polare Koordinatensystem aus der Fig. 3 mit der Axialrichtung Ar, der Radialrichtung Rr, der Umfangsrichtung Ur und der zugeordneten Rotationsachse Ra zur Verdeutlichung der Orientierung der einzelnen Bauelemente angezeigt.

Die erste optische Rotations-Übertragungseinrichtung 501 ist in der mechanischen Schnittstelle 20 zwischen zwei aktiven Armmodulen 5 eingerichtet und hat dort die optomechanische Rotations-Schnittstelle 55 konstituiert. Die mechanische Schnittstelle 20 umfasst einerseits die rotierbare erste Anschlusseinrichtung 30 des einen aktiven Armmoduls 5. Andererseits umfasst die mechanische Schnittstelle 20 die gehäusefeste zweite Anschlusseinrichtung 40 des weiteren aktiven Armmoduls 5.

Die erste optische Rotations-Übertragungseinrichtung 501 weist auf der bezüglich des einen aktiven Armmoduls 5 rotierbaren ersten Anschlusseinrichtung 30 die erste Schnittstellenseite 56 mit der dort vorgesehenen Rotations-Steckeinrichtung 100. In Axialrichtung Ar gegenüberliegend weist die erste optische Rotations-Übertragungseinrichtung 501 die Rotations-Gegensteckeinrichtung 200 auf der bezüglich des weiteren aktiven Armmoduls 5 gehäusefesten zweiten Anschlusseinrichtung 40 auf. Das weitere aktive Armmodul 5 ist dabei mittels des aktiven Armmoduls 5 rotierbar.

Die Rotations-Steckeinrichtung 100 umfasst radial innen eine erste Ferrule 110 mit dem daran mechanisch und optisch angeschlossenen Lichtwellenleiter 119 des einen aktiven Armmoduls 5. Radial außen auf einem Außenumfangsrand der ersten Ferrule 110 ist eine Radiallagerhülse 300 angeordnet, die das Radialgleitlager bildet. Hierbei sitzt die Radiallagerhülse 300 mit einem gebundenen ersten Längsendabschnitt auf der ersten Ferrule 110 und steht von einem freien Längsende der ersten Ferrule 110 mit einem freien zweiten Längsendabschnitt in eine Axialrichtung Ar ab.

Die Radiallagerhülse 300 ist zusammen mit der ersten Ferrule 110 in einer ersten Aufnahme 504 der rotierbaren ersten Anschlusseinrichtung 30 vorgesehen, insbesondere festgelegt. Die erste Aufnahme 504 kann z. B. als ein Rohr, eine Hülse etc. ausgebildet sein. Vorliegend ist die erste Aufnahme 504 insbesondere als ein Messingrohr ausgebildet. Die erste Aufnahme 504 kann eine Einrichtung, z. B. eine Bohrung, und/oder eine Vorrichtung für eine Fixierung des Lichtwellenleiters 119, der ersten Ferrule 110 und/oder der Radiallagerhülse 300 aufweisen.

Die erste Aufnahme 504 ist bevorzugt innerhalb der Abtriebswelle 17 aufgenommen. Die erste Aufnahme 504 kann dabei einteilig oder einstückig mit der Abtriebswelle 17 vorgesehen oder teilweise stofflich einstückig oder integral mit der Abtriebswelle 17 ausgebildet sein.

Die Rotations-Gegensteckeinrichtung 200 umfasst ebenfalls radial innen eine zweite Ferrule 210 mit dem daran mechanisch und optisch angeschlossenen Lichtwellenleiter 119 des weiteren aktiven Armmoduls 5. Die zweite Ferrule 210 ist in einer zweiten Aufnahme 510 der gehäusefesten zweiten Anschlusseinrichtung 40 des weiteren aktiven Armmoduls 5 eingerichtet, wobei ein einem freien Längsende der zweiten Ferrule 210 abgewandter Abschnitt der zweiten Ferrule 210 in der Axialrichtung Ar (nach rechts mit Bezug auf die Fig. 6) in der zweiten Aufnahme 510 vorgesehen, insbesondere festgelegt, ist. Ein in die andere Axialrichtung Ar (nach links mit Bezug auf die Fig. 6) wegstehender Abschnitt der zweiten Ferrule 210 mit dem freien Längsende der zweiten Ferrule 210 ist außen als Gleitlagerschale für die radial innere Fläche der Radiallagerhülse 300 ausgebildet.

Ein vom freien Längsende der zweiten Ferrule 210 ausgehender Abschnitt der zweiten Ferrule 210 ist innerhalb der zweiten Aufnahme 510 eingerichtet und vollumfänglich radial beabstandet zur zweiten Aufnahme 510 vorgesehen. D. h. die zweite Aufnahme 510 ist entsprechend ausgenommen. Die Ausnehmung zwischen dem Abschnitt der zweiten Ferrule 210 und der zweiten Aufnahme 510 ist bevorzugt hohlzylindrisch ausgebildet und dient einer Aufnahme des in die Axialrichtung Ar von der ersten Ferrule 110 wegstehenden zweiten freien Längsendabschnitts der Radiallagerhülse 300. Der Abschnitt der zweiten Ferrule 210 mit dem freien Längsende dient außen als Gleitlagerschale für die radial innere Fläche des zweiten freien Längsendabschnitts der Radiallagerhülse 300.

Die zweite Ferrule 210 ist über die zweite Aufnahme 510 der gehäusefesten zweiten Anschlusseinrichtung 40gegenüber dem Gehäuse 10 ortsfest am/im weiteren aktiven Armmodul 5 eingerichtet. Die zweite Aufnahme 510 kann eine Einrichtung, z. B. eine Bohrung, und/oder eine Vorrichtung für eine Fixierung des Lichtwellenleiters 119 und/oder der zweiten Ferrule 210 aufweisen.

Es ist bevorzugt, dass die zweite Aufnahme 510 mittels einer oder mehrerer Federn 513 gegen die erste Aufnahme 504 mechanisch vorgespannt ist. Statt einer Feder 513 ist auch ein Elastikelement anwendbar. Zeitlich nach einem Zusammenstecken der Rotations-Schnittstelle 55 bzw. der aktiven Armmodule 5, also bei der eingerichteten ersten optischen Rotations-Übertragungseinrichtung 501 ist zwischen den beiden in der Radiallagerhülse 300 vorgesehenen Längsendabschnitten der ersten Ferrule 110 und der zweiten Ferrule 210 bevorzugt der Spalt 312 eingerichtet, sodass die beiden freien Längsenden der Ferrulen nicht in einem mechanischen Rotationschleifkontakt sind. Der Spalt 312 ist bevorzugt als ein Fluidspalt, insbesondere als ein Luftspalt, eingerichtet. Der Spalt kann auf verschiedene Arten und Weisen zwischen den Längsendabschnitten der Ferrulen innerhalb der Radiallagerhülse 300 sichergestellt werden.

Der Spalt 312 ist z. B. über die Positionen der Ferrulen in der rotierbaren ersten Anschlusseinrichtung 30 und in der gehäusefesten zweiten Anschlusseinrichtung 40 sicherstellbar, wobei deren Positionen wiederum gegenüber dem betreffenden Gehäuse sichergestellt sein müssen. Ferner ist hierfür z. B. ein axial gegenseitig gelagertes, z. B. gleitgelagertes, Ansitzen der Aufnahmen möglich. Des Weiteren kann der Spalt 312 mittels der mechanischen Schnittstelle 20 realisiert sein, welche derart ausgebildet und einrichtbar ist, dass sich bei einer bestimmten Ausbildung der ersten optischen Rotations-Übertragungseinrichtung 501 der Spalt 312 einrichtet.

Die rotierbare erste Anschlusseinrichtung 30 des einen aktiven Armmoduls 5 (links in der Fig. 6) kann die gehäusefeste zweite Anschlusseinrichtung 40 des weiteren aktiven Armmoduls 5 (rechts in der Fig. 6) rotierend antreiben. D. h. das weitere aktive Armmodul 5 ist bezüglich des einen aktiven Armmoduls 5 rotierbar im Roboterarm eingerichtet. Hierbei kann das eine aktive Armmodul 5 mit einem vorhergehenden (proximalen) Armmodul mechanisch, optisch, elektrisch und/oder fluidisch verbunden sein. Dieses vorhergehende Armmodul kann als ein aktives oder passives Armmodul ausgebildet sein.

Bei der anhand der Fig. 6 erläuterten Ausgestaltung der ersten optischen Rotations-Übertragungseinrichtung 501 ist die Rotations-Schnittstelle 55 als Abschnitt der mechanischen Schnittstelle 20 zwischen zwei aktiven Armmodulen 5 ausgebildet. Es ist möglich, die Rotations-Schnittstelle 55 ohne eine solche mechanische Schnittstelle 20 auszubilden oder die mechanische Schnittstelle 20 abseits einer solchen vorzusehen, d. h. als versetzte Anordnung der Rotations-Schnittstelle 55 gegenüber der eigentlichen mechanischen Schnittstelle 20.

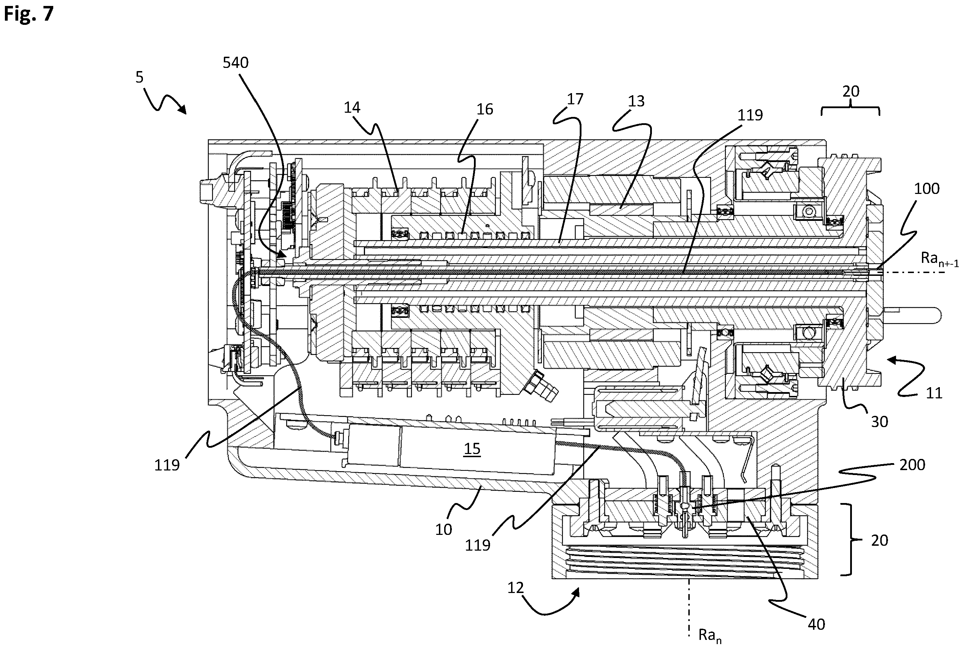

Die Fig. 7 zeigt in einer zentral geschnittenen, zweidimensionalen Seitenansicht, ein aktives Armmodul 5 aus der Fig. 3 in einer abgewandelten Ausführungsform. Das aktive Armmodul 5 in der Fig. 7 ist im Wesentlichen identisch zu einem aktiven Armmodul 5 in der Fig. 3 aufgebaut, weshalb für die Bestandteile des Armmoduls in der Fig. 7 dieselben Bezugszeichen verwendet werden.

Das Armmodul 5 in der in der Fig. 7 dargestellten abgewandelten Ausführungsform weist eine Gehäuses 10 ohne Endkappe auf. Die optische Datenübertragung im Gehäuse 10 des aktiven Armmoduls 5 erfolgt von der Rotations-Steckeinrichtung 100 über den Lichtleiter 119, der in der Abtriebswelle 17 verläuft und mittels einer Lichtleiterführung 540 aus der Abtriebswelle 17 herausführt, zum Transceiver 15. Von dem Transceiver 15 erfolgt dann die optische Datenübertragung weiter über den Lichtleiter 119 zu der Rotations-Gegensteckeinrichtung 200. Selbstverständlich kann die optische Datenübertragung auch bidirektional erfolgen, als auch in die andere Richtung ausgehend von der Rotations-Gegensteckeinrichtung 200, über den Lichtleiter 119, den Transceiver 15, den Lichtleiter 119 zur Rotations-Steckeinrichtung 100.

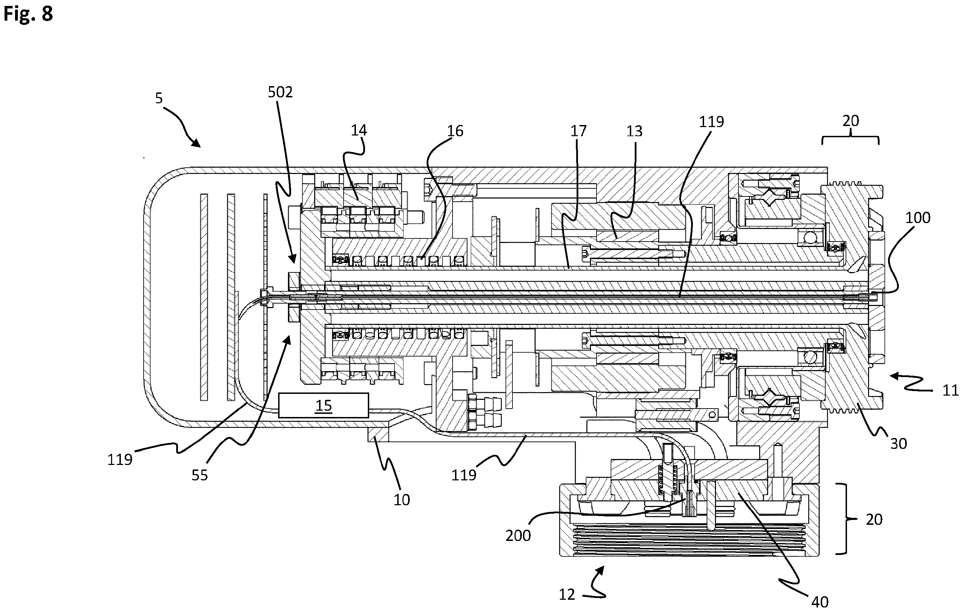

Die Fig. 8 zeigt in einer zentral geschnittenen, zweidimensionalen Seitenansicht, ein zur der Fig. 3 bzw. der Fig. 7 alternatives aktives Armmodul 5 des Industrieroboters gemäß Fig. 1 mit einer zweiten Ausführungsform der Rotations-Übertragungseinrichtung. Das in der Fig. 8 gezeigte aktive Armmodul 5 ist im Wesentlichen identisch zu den beiden aktiven Armmodulen 5 in der Fig. 3 bzw. dem aktiven Armmodul in der Fig. 7 aufgebaut, weshalb für die Bestandteile dieselben Bezugszeichen verwendet werden. Das Armmodul 5 in der in der Fig. 8 dargestellten abgewandelten Ausführungsform weist eine geänderte Außenform des Gehäuses 10 auf.

Bei dem in der Fig. 8 gezeigten aktiven Armmodul 5 ist im Gegensatz zu der Ausführungsform in der Fig. 3 eine zweite Rotations-Übertragungseinrichtung 502 vorgesehen, die abseits der mechanischen Schnittstelle 20 in dem einzelnen aktiven Armmodul 5 eingerichtet ist und dort eine optomechanische Rotations-Schnittstelle 55 konstituiert. Hierbei ist die Rotations-Schnittstelle 55 kein Bestandteil der mechanischen Schnittstelle 20.

Die Lichtleiterführung des aktiven Armmoduls in der Fig. 8 ist dabei so ausgestaltet, dass der Lichtleiter 119 die ersten und zweiten Anschlussseiten 11, 12 innerhalb des Gehäuses 10 mit dem Transceiver 15 über die zweite Rotations-Übertragungseinrichtung 502 verbindet. Die optische Datenübertragung im Gehäuse 10 des aktive Armmoduls 5 erfolgt von der Rotations-Steckeinrichtung 100 über den Lichtleiter 119, der in der Abtriebswelle 17 verläuft, zu der zweite Rotations-Übertragungseinrichtung 502. Von der zweiten Rotations-Übertragungseinrichtung 502 erfolgt dann die optische Datenübertragung weiter über den Lichtleiter 119 zu dem Transceiver 15 und von dort über den Lichtwellenleiter 119 zu der Rotations-Gegensteckeinrichtung 200. Die optische Datenübertragung kann dabei bidirektional erfolgen.

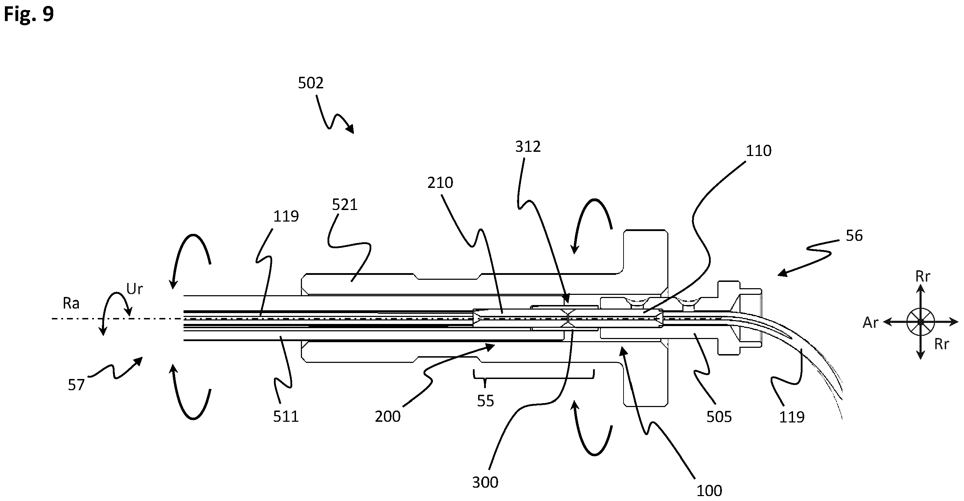

Im Folgenden wird anhand der Fig. 9 eine vergrößert dargestellte und im Verhältnis zur Darstellung in der Fig. 8 um 180° gedrehte Ausführungsform der zweiten optischen Rotations-Übertragungseinrichtung 502 in Fig.8 näher erläutert, die auf der in der Fig. 4 und der Fig. 5 gezeigten allgemeinen Form der ersten optischen Rotations-Übertragungseinrichtung 501 aufbaut. Die Ausführungsform der zweiten optischen Rotations-Übertragungseinrichtung 502 in der Fig. 9 ist zur Ausführungsform der der ersten optischen Rotations-Übertragungseinrichtung 501 in der Fig. 6 teilweise kinematisch umgekehrt.

Die zweite Rotations-Übertragungseinrichtung 502 umfasst auf ihrer Statorseite (rechts in der Fig. 9) die erste optomechanische Schnittstellenseite 56 mit der dort vorgesehenen Rotations-Steckeinrichtung 100. In Axialrichtung Ar gegenüberliegend umfasst die zweite Rotations-Übertragungseinrichtung 502 die zweite optomechanische Schnittstellenseite 57 mit der Rotations-Gegensteckeinrichtung 200 auf ihrer Rotorseite (links in der Fig. 9).

Die Rotations-Steckeinrichtung 100 umfasst radial innen die erste optische Ferrule 110 mit dem daran mechanisch und optisch angeschlossenen Lichtwellenleiter 119. Die erste Ferrule 110 ist in einer ersten Aufnahme 505 eingerichtet, wobei ein einem freien Längsende abgewandter Längsendabschnitt der ersten Ferrule 110 in der Axialrichtung Ar (nach rechts mit Bezug auf Fig. 9) in der ersten Aufnahme 505 vorgesehen, insbesondere festgelegt, ist. Ein in die Axialrichtung Ar (nach links mit Bezug auf die Fig. 9) sich erstreckender, dem freien Längsende zugewandter Abschnitt der ersten Ferrule 110 dient außen als Gleitlagerschale für eine radial innere Fläche der Radiallagerhülse 300.

Die als Radialgleitlager ausgebildete Radiallagerhülse 300 ist dabei radial außen auf einem Außenumfangsrand der ersten Ferrule 110 angeordnet. Hierbei sitzt die Radiallagerhülse 300 lediglich mit einem gebundenen Längsendabschnitt auf einer zweiten Ferrule 210 und steht von einem freien Längsende der ersten Ferrule 110 in die Axialrichtung Ar (nach rechts mit Bezug auf die Fig. 9) ab.

Die Radiallagerhülse 300 ist zusammen mit einem zweiten Abschnitt der zweiten Ferrule 210, der von ihr sich in die Axialrichtung Ar erstreckt (nach links mit Bezug auf die Fig. 9) in einer zweiten Aufnahme 511 aufgenommen, insbesondere festgelegt. Die zweite Aufnahme 511 kann z. B. als ein Rohr, eine Hülse etc. ausgebildet sein. Vorliegend ist die zweite Aufnahme 511 insbesondere als ein Messingrohr ausgebildet. Die zweite Aufnahme 511 ist innen in der Abtriebswelle 17 bevorzugt mit der Abtriebswelle 17 mit rotierbar aufgenommen; d. h. die erste Ferrule 1110 und die Radiallagerhülse 300 sind gegenüber dem Gehäuse fest im Armmodul 5 eingerichtet.

Hierbei kann die zweite Aufnahme 511 innerhalb einer zentralen Durchgangsausnehmung einer Lagerhülse 521 aufgenommen sein, welche die zweite Aufnahme 511 in der Abtriebswelle 17 mit rotierbar lagert. In einem Bereich eines gehäuseinneren freien Endes der Abtriebswelle 17, also abseits der rotierbaren erste Anschlusseinrichtung 30, kann die Lagerhülse 521 von der Abtriebswelle 17 ab- und nach innen in das Gehäuse 10 hervorstehen. Ferner kann sich die zweite Aufnahme 511 im Wesentlichen durch die Abtriebswelle 17 hindurch erstrecken und an einem der rotierbaren Anschlusseinrichtung 30 benachbarten Ende eine bevorzugt drehfeste optische Weiterkontaktierung aufweisen.

Die zweite Aufnahme 511 kann eine Einrichtung, z. B. eine Bohrung, und/oder eine Vorrichtung für eine Fixierung des Lichtwellenleiters 119 der zweiten Ferrule 210 und/oder der Radiallagerhülse 300 aufweisen. Ferner kann ein Außenumfangsrand der zweiten Ferrule 210 radial innerhalb der Radiallagerhülse 300 ggf. ebenfalls als Gleitlagerschale fungieren. In einem solchem Fall kann die Radiallagerhülse 300 gegenüber der ersten Ferrule 110 rotierbar eingerichtet sein. Es ist möglich, die Radiallagerhülse 300 analog auf der axial gegenüberliegenden ersten Ferrule 110 vorzusehen.

Ein vom freien Längsende der ersten Ferrule 110 ausgehender freier Längsendabschnitt der ersten Ferrule 110 und ggf. ein sich daran anschließender Längsabschnitt der ersten Aufnahme 505 ist bzw. sind für ein Einrichten der zweiten optischen Rotations-Übertragungseinrichtung 502 stirnseitig abseits der rotierbaren Anschlusseinrichtung in die zentrale Durchgangsausnehmung der Lagerhülse 521 vorbewegbar. Hierbei kann insbesondere der Längsendabschnitt der ersten Aufnahme 505 in der Durchgangsausnehmung der Lagerhülse 521 aufgenommen oder gelagert, insbesondere gleitgelagert sein.

Für das Einrichten der zweiten optischen Rotations-Übertragungseinrichtung 502 wird das freie Längsende der ersten Ferrule 110 bevorzugt mit dem sich daran anschließenden Längsendabschnitt der ersten Aufnahme 505 in die Durchgangsausnehmung der Lagerhülse 521 vorbewegt. Die Lagerhülse 521 befindet sich dabei bevorzugt schon in der Abtriebswelle 17. Hierbei kommt zuerst das freie Längsende der ersten Ferrule 110 in mechanischen Kontakt mit der Radiallagerhülse 300, wobei das freie Längsende darin zentriert ist. Anschließend wird die erste Ferrule 110 über die erste Aufnahme 505 derart weit in die Radiallagerhülse 300 vorbewegt, bis sich ein gewünschter Spalt 312 einrichtet.

Der Spalt 312 ist bevorzugt wiederum als ein Fluidspalt, insbesondere ein Luftspalt, eingerichtet. Der Spalt 312 kann auf verschiedene Arten und Weisen zwischen den Längsendabschnitten der Ferrulen innerhalb der Radiallagerhülse 300 sichergestellt werden. Der Spalt 312 ist z. B. über die Positionen der Ferrulen in den Aufnahmen sicherstellbar, wobei deren Positionen wiederum gegenüber dem Gehäuse sichergestellt sein müssen. Die erste Aufnahme 505 kann z. B. mittels einer Feder (in der Fig. 9 nicht dargestellt) gegen die zweite Aufnahme 511 mechanisch vorgespannt eingerichtet sein.

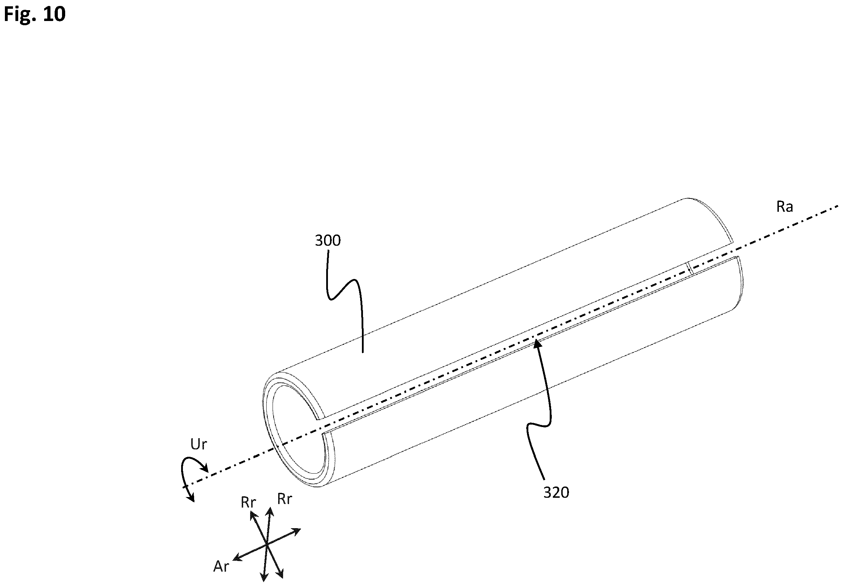

Die Fig. 10 zeigt eine Ausführungsform einer Radiallagerhülse 300, wie sie bei den in der Fig. 6 bzw. der Fig. 9 gezeigten Rotations-Übertragungseinrichtungen 501 bzw. 502 einsetzbar ist. Die Radiallagerhülse 300 ist im Wesentlichen hohlzylindrisch ausgebildet, wobei eine Innenwand der Radiallagerhülse 300 als eine Gleitfläche dient.

Eine Wandung der Radiallagerhülse 300 weist einen in Axialrichtung Ar der Radiallagerhülse vollständig hindurchgehenden Längsdurchgangsschlitz 320 auf. D. h. die Radiallagerhülse 300 ist an keiner axialen Position über ihren dortigen Umfang hinweg vollständig geschlossen. Der Längsdurchgangsschlitz 320 sorgt für eine gewisse Federbarkeit der Radiallagerhülse 300 in Umfangsrichtung Ur und/oder dient einer Toleranzkompensation durch die Radiallagerhülse 300. Es ist bei einer alternativen Ausführungsform auch möglich, den Längsdurchgangsschlitz 320 wegzulassen.

Es ist ferner möglich, andere Radiallagerhülsen anzuwenden. Hierbei ist es bevorzugt, dass eine innere Gleitfläche im Wesentlichen zylinderförmig, ggf. gestuft zylinderförmig, ausgebildet ist. Bei einer Stufenform sind die die Stufenform konstituierenden inneren Zylinder konzentrisch in der Radiallagerhülse eingerichtet. Eine äußere Form der Radiallagerhülse ist in Bezug auf deren bzw. dessen innere Form zweitrangig. D. h. hier kann die Radiallagerhülse von einer Zylinderform abweichen. Hierdurch ist z. B. eine Kodierung der Radiallagerhülse möglich.

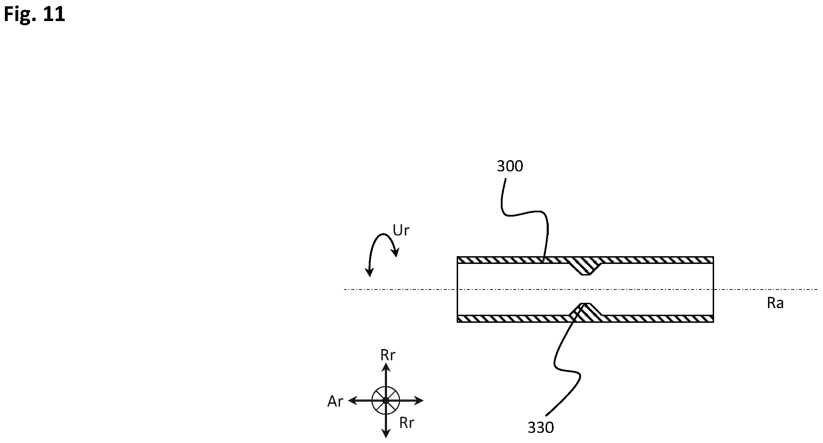

Die Fig. 11 zeigt die in der Fig. 10 dargestellte Radiallagerhülse 300 im Querschnitt. Die Radiallagerhülse 300 weist einen inneren Umlaufbund 330 als einen Axialanschlag für eine hier nicht dargestellte Ferrule oder beide Ferrulen auf. D. h. bei der eingerichteten optischen Rotations-Übertragungseinrichtung 501 bzw. 502 kann eine Ferrule oder können beide Ferrulen axial am inneren Umlaufbund 330 ansitzen. Hierbei kann die betreffende Ferrule mittels einer mechanischen Feder gegen den inneren Umlaufbund 330 mechanisch vorgespannt sein. Der Umlaufbund 330 kann innen vollständig oder nur teilweise umlaufend eingerichtet sein.

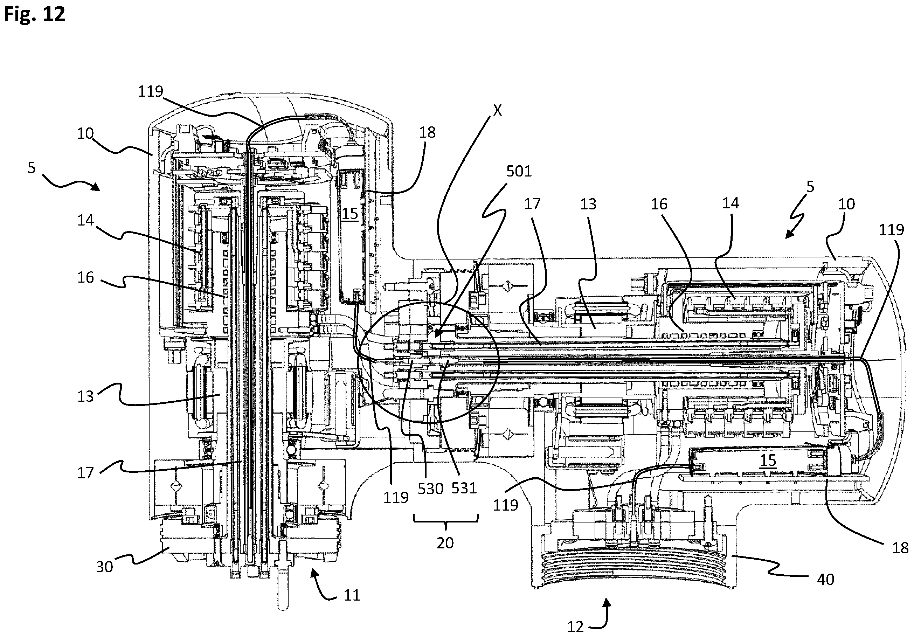

Die Fig. 12 zeigt in einer zentral geschnittenen, zweidimensionalen Seitenansicht, zwei miteinander verbundene aktive Armmodule 5 des Industrieroboters gemäß der Fig. 1 mit einer dritten Ausführungsform. Die in der Fig. 12 gezeigten aktiven Armmodule 5 sind im Wesentlichen identisch zu den beiden aktiven Armmodulen 5 in der Fig. 3, weshalb für die Bestandteile dieselben Bezugszeichen verwendet werden. Bei dem in der Fig. 12 gezeigte Aufbau wird gegenüber dem in der Fig. 3 gezeigte Aufbau eine veränderte Ausführungsform der ersten optische Rotations-Übertragungseinrichtung 501 eingesetzt.

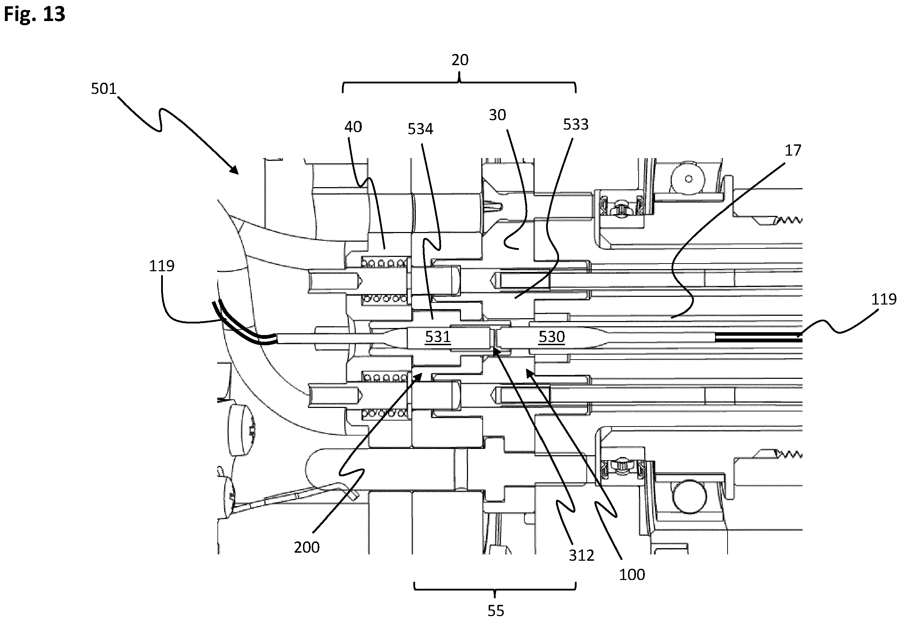

Die Fig. 13 zeigt in einer vergrößerten Detailansicht X die veränderte Ausführungsform der ersten optischen Rotations-Übertragungseinrichtung 501 gemäß der Fig. 12.

Bei der veränderten Ausführungsform der ersten optische Rotations-Übertragungseinrichtung 501 werden, wie die Fig. 12 und detailreicher die Fig. 13 zeigen, Linsen anstelle von Ferrulen verwendet. Die veränderten Ausführungsform der ersten optischen Rotations-Übertragungseinrichtung 501 in der Fig. 12 und der Fig. 13 entspricht dabei der generischen Form der ersten optischen Rotations-Übertragungseinrichtung 501, die anhand der Fig. 4 näher erläutert ist. Prinzipiell entspricht die veränderte Ausführungsform der ersten optischen Rotations-Übertragungseinrichtung 501 in Fig. 12 und Fig. 13 auch der in der Fig. 5 gezeigten Ausgestaltung der optischen Rotations-Übertragungseinrichtung.

Die veränderte Ausführungsform der ersten optischen Rotations-Übertragungseinrichtung 501 ist, wie die Fig. 12 und Fig. 13 zeigen, in der mechanischen Schnittstelle 20 zwischen zwei aktiven Armmodulen 5 eingerichtet und bildet dort die optomechanische Rotations-Schnittstelle 55. Die mechanische Schnittstelle 20 umfasst einerseits die rotierbare erste Anschlusseinrichtung 30 des einen aktiven Armmoduls 5 (rechtes Armmodul in der Fig. 12) und die gehäusefeste zweite Anschlusseinrichtung 40 des weiteren aktiven Armmoduls 5 (linkes Armmodul in der Fig. 12).

Die erste optische Rotations-Übertragungseinrichtung 501 weist bezüglich des einen aktiven Armmoduls 5 auf der rotierbaren ersten Anschlusseinrichtung 30 die Rotations-Steckeinrichtung 100 und bezüglich des weiteren aktiven Armmoduls 5 auf der gehäusefesten zweiten Anschlusseinrichtung 40 die Rotations-Gegensteckeinrichtung 200 auf.

Die Rotations-Steckeinrichtung 100 umfasst radial innen eine erste Linse 530 mit dem daran mechanisch und optisch angeschlossenen Lichtwellenleiter 119 des einen aktiven Armmoduls 5. Radial außen auf einem Außenumfangsrand der ersten Linse 110 ist eine erste Linsenaufnahme 533 angeordnet. Die erste Linsenaufnahme 533 ist mit einem gebundenen ersten Abschnitt auf dem hinteren Teil der ersten Linse 530 fixiert. Zwischen einem an den ersten Abschnitt anschließenden zweiten Abschnitt der ersten Linsenaufnahme 533 und dem vorderen Teil der ersten Linse 530 ist ein hohlzylinderförmiger Eingriffsraum ausgebildet. Der zweite Abschnitt der ersten Linsenaufnahme 533 steht dabei über die Oberfläche der zweiten Linse 530 in Axialrichtung vor.

Die erste Linsenaufnahme 533 ist weiterhin drehfest mit der Abtriebswelle 17 verbunden. Die erste Linsenaufnahme 533 kann dabei einteilig oder einstückig mit der Abtriebswelle 17 vorgesehen oder teilweise stofflich einstückig oder integral mit der Abtriebswelle 17 ausgebildet sein.

Die Rotations-Gegensteckeinrichtung 200 umfasst radial innen eine zweite Linse 531 mit dem daran mechanisch und optisch angeschlossenen Lichtwellenleiter 119 des weiteren aktiven Armmoduls 5. Radial außen auf einem Außenumfangsrand der zweiten Linse 531 sitzt eine zweite Linsenaufnahme 534 mit einem gebundenen ersten Abschnitt auf dem hinteren Teil der zweiten Linse 531 auf. An den ersten Abschnitt der zweiten Linsenaufnahme 534 schließt sich ein freier zweiter Abschnitt an, der von der Oberfläche der zweiten Linse 531 in Axialrichtung vorsteht.

Der freie zweite Abschnitt der zweiten Linsenaufnahme 534 ist zylinderförmig ausgebildet und greift bei zusammengebauten Armmodulen 5, wenn die rotierbare erste Anschlusseinrichtung 30 und die gehäusefeste zweite Anschlusseinrichtung 40 aufeinander liegen und in der in Zusammenhang mit der Fig. 3 erläuterten Weise montiert wurden, in den hohlzylinderförmigen Eingriffsraum, der zwischen dem zweiten Abschnitt der ersten Linsenaufnahme 533 und dem vorderen Teil der ersten Linse 530 ausgebildet ist, ein. Der zweite Abschnitt der ersten Linsenaufnahme 533 dient dabei mit der den hohlzylinderförmigen Eingriffsraum bildenden inneren Fläche als Gleitlagerschale für die radial äußere Fläche des zweiten Abschnitts der zweiten Linsenaufnahme 534.

Bei der in der Fig. 12 und der Fig. 13 gezeigten Variante der ersten optischen Rotations-Übertragungseinrichtung 501 erfolgt die optische Signalübertragung von dem Lichtleiter 119 des aktiven Armmoduls 5 über die erste Linse 350 des aktiven Armmoduls 5, den Luftspalt 312 zwischen der ersten Linse 350 des aktiven Armmoduls 5 und der zweiten Linse 351 des weiteren aktiven Armmoduls 5, die zweite Linse 531 des weiteren aktiven Armmoduls 5 zu dem Lichtleiter 119 des weiteren aktiven Armmoduls 5.

Die Verwendung eines Linsen-Systems, wie bei dem Aufbau in der Fig.12 und der Fig. 13, hat gegenüber dem in der Fig. 3 gezeigten Aufbau mit einem Ferrulen-System den Vorteil, dass die optische Signalübertragung mithilfe von Linsen keine so genaue Ausrichtung der Linsen zueinander im Vergleich zu den Ferrulen erforderlich macht, weshalb eine Radiallagerausgestaltung durch die Linsenaufnahmen ohne zusätzliche Radiallagerhülse ausreicht.

Die in den Fig. 12 und Fig. 13 gezeigte Variante der ersten Rotations-Übertragungseinrichtung 501 lässt sich auch auf die in Fig. 8 und Fig. 9 gezeigte zweite Rotations-Übertragungseinrichtung 502 anwenden, bei der die zweite Rotations-Übertragungseinrichtung 502 abseits der mechanischen Schnittstelle 20 in dem einzelnen aktiven Armmodul 5 eingerichtet ist und dort eine optomechanische Rotations-Schnittstelle 55 konstituiert.

Gemäß der Erfindung ist eine optische Hochgeschwindigkeits-Signalübertragung zwischen zwei relativ zueinander rotierbaren Armmodulen eines Industrieroboters realisiert. Die Armmodule sind über steckbare und/oder schraubbare Anschlüsse mit entsprechenden Kontaktierungen in einer mechanischen Schnittstelle miteinander verbunden. Die Komponenten der optischen Rotations-Übertragungseinrichtung für die Signalübertragung sind daher steckbar. Eine erzielbare Datenrate der Signalübertragung, z. B. für eine EtherCAT-Verbindung oder eine Gigabit Ethernet Verbindung, beträgt wenigstens 1,1 Gbit/s. Die Lösung ist robust und kann im industriellen Umfeld ihre Funktionsfähigkeit aufrechterhalten. Eine Echtzeitfähigkeit, z. B. von EtherCAT, wird nicht beeinträchtigt.

Ferner ist ein einfacher und kostengünstiger Aufbau für die Rotations-Übertragungseinrichtung realisiert, wobei ein Gleitreibungskontakt eingerichtet ist.

Gegenüber herkömmlichen Rotationsübertragern ergeben sich deutliche Kosteneinsparungen insbesondere in Bezug auf die Materialkosten. Ferner ergeben sich ein erheblich kleinerer geometrischer Querschnitt und ein erheblich kleineres Volumen für eine Rotations-Übertragungseinrichtung, sodass eine optische Rotationsübertragung z. B. in eine 3 mm-Durchführung z. B. der Abtriebswelle eingebaut werden kann.

Die oben erläuterten und/oder die unten in den abhängigen Ansprüchen wiedergegebenen, vorteilhaften Ausbildungen und/oder Weiterbildungen der Erfindung können - außer z. B. in einem Fall von einer eindeutigen Abhängigkeit oder unvereinbarer Alternativen - in beliebiger, vom Anspruchssatz gestützter Kombination miteinander zur Anwendung kommen.

### Bezugszeichenliste:

- 1: Roboterbasis
- 2: Roboterarm
- 5: aktives Armmodul
- 5.1: erstes aktives Armmodul
- 5.2: zweites aktives Armmodul
- 5.3: drittes aktives Armmodul
- 5.4: viertes aktives Armmodul
- 5.5: fünftes aktives Armmodul
- 5.6: sechstes aktives Armmodul
- 6: passives Armmodul
- 6.1: erstes passives Armmodul
- 6.2: zweites passives Armmodul
- 7: distales Roboterarm-Ende
- 10: Gehäuse
- 11: erste Anschlussseite
- 12: zweite Anschlussseite
- 13: Antriebseinrichtung
- 14: Schleifringeinrichtung
- 15: Transceiver
- 16: Rotationsdurchführung
- 17: Abtriebswelle
- 18: Modul-Steuereinheit
- 19: Wellenanordnung
- 20: mechanische Schnittstelle
- 30: erste Anschlusseinrichtung
- 40: zweite Anschlusseinrichtung
- 55: Rotations-Schnittstelle
- 56: erste Schnittstellenseite
- 57: zweite Schnittstellenseite
- 100: Rotations-Steckeinrichtung
- 110: erste Ferrule
- 119: Lichtwellenleiter
- 200: Rotations-Gegensteckeinrichtung
- 210: zweite Ferrule
- 300: Radiallagerhülse
- 301: Außengewinde
- 302: erste Stirnverzahnung
- 303: Zentrierstift
- 304: erste Kontakteinrichtung
- 312: Spalt
- 320: Längsdurchgangsschlitz
- 330: innerer Umlaufbund
- 401: Befestigungsrings
- 402: zweite Stirnverzahnung
- 403: Zentieraufnahme
- 404: zweite Kontakteinrichtung
- 501: erste optische Rotations-Übertragungseinrichtung
- 502: zweite optische Rotations-Übertragungseinrichtung
- 504: erste Aufnahme (erste optische Rotations-Übertragungseinrichtung)
- 505: erste Aufnahme (zweite optische Rotations-Übertragungseinrichtung)
- 510: zweite Aufnahme (erste optische Rotations-Übertragungseinrichtung)
- 511: zweite Aufnahme (zweite optische Rotations-Übertragungseinrichtung)
- 513: Feder
- 521: Lagerhülse
- 530: erste Linse
- 531: zweite Linse
- 533: erste Linsenaufnahme
- 534: zweite Linsenaufnahme
- 540: Lichtleiterführung

## Patentansprüche

1. Industrieroboter (1) mit einem modularen Roboterarm (2), der eine Mehrzahl von Armmodulen aufweist, wobei wenigstens ein Armmodul (5) ein Gehäuse (10) mit einer ersten Anschlussseite (11) und einer zweiten Anschlussseite (12) aufweist, wobei die erste Anschlussseite (11) relativ gegenüber der zweiten Anschlussseite (12) um eine Rotationsachse steuerbar verdrehbar ausgelegt ist und wobei zwischen der ersten Anschlussseite (11) und der zweiten Anschlussseite (12) oder einer zweiten Anschlussseite eines weiteren Armmoduls eine optische Rotations-Übertragungseinrichtung (501; 502) angeordnet ist,
die eine optomechanische Rotations-Schnittstelle (55) mit einer ersten Schnittstellenseite (56) und einer zweiten Schnittstellenseite (57) aufweist, die einander zugewandt und jeweils im Wesentlichen rotationssymmetrisch und zueinander komplementär ausgebildet sind,
wobei die erste Schnittstellenseite (56) eine optomechanische Rotations-Steckeinrichtung (100) mit einer ersten optischen Einrichtung und die zweite Schnittstellenseite (57) eine optomechanische Rotations-Gegensteckeinrichtung (200) mit einer zweiten optischen Einrichtung aufweist, die gegeneinander rotierbar eingerichtet und untereinander mechanisch radialgleitgelagert mittels eines Radialgleitlagers und einer dazu komplementären Gleitlagerschale sind,
wobei die optomechanische Rotations-Steckeinrichtung (100) und die optomechanische Rotations-Gegensteckeinrichtung (200) als zylinderförmiges Hohlraumsystem ausgebildet sind, wobei zwischen der ersten optischen Einrichtung und der zweiten optischen Einrichtung in Axialrichtung der Rotations-Übertragungseinrichtung ein Spalt (312) ausgebildet ist, über den die optische Signalübertragung hinweg erfolgt,
**dadurch gekennzeichnet, dass**
die Rotations-Steckeinrichtung (100) eine erste Ferrule (110) und die Rotations-Gegensteckeinrichtung (200) eine zweite Ferrule (210) aufweisen, wobei die erste Ferrule (110) und die zweite Ferrule (210) jeweils wenigstens abschnittsweise innerhalb einer Radiallagerhülse (300) gegeneinander rotierbar eingerichtet sind,
wobei die Radiallagerhülse (300) einen inneren Umlaufbund (330) aufweist, an welchem die erste Ferrule (110) und/oder die zweite Ferrule (210) axial ansitzbar sind.

2. Industrieroboter (1) gemäß Anspruch 1, wobei die gegeneinander rotierbaren ersten und zweiten Schnittstellenseiten (56, 57) der optischen Rotations-Übertragungseinrichtung in Axialrichtung eine im Wesentlichen festgelegte Position besitzen, wobei die erste Schnittstellenseite (56) und die zweite Schnittstellenseite (57) in Axialrichtung gegeneinander mechanisch vorgespannt sind.

3. Industrieroboter (1) gemäß Anspruch 1 oder 2, wobei die Radiallagerhülse (300) einen in Axialrichtung der Rotations-Schnittstelle (55) vollständig hindurchgehenden Längsdurchgangsschlitz (320) aufweist.

4. Industrieroboter (1) gemäß einem der Ansprüche 1 bis 3, wobei die Rotations-Steckeinrichtung (100) eine erste Aufnahme (504; 505) für die erste Ferrule (110) und die Rotations-Gegensteckeinrichtung (200) eine zweite Aufnahme (510; 511) für die zweite Ferrule (210) umfasst, wobei die Ferrulen und die Aufnahmen jeweils fest miteinander verbunden sind.

5. Industrieroboter (1) gemäß einem der Ansprüche 1 bis 4, wobei die erste Anschlussseite (11) um die Rotationsachse rotierbar und die zweite Anschlussseite (12) drehfest eingerichtet ist.

6. Industrieroboter (1) gemäß Anspruch 5, wobei in dem Gehäuse (10) eine Antriebseinrichtung (13) eingerichtet ist, mit der eine rotierbare Anschlusseinrichtung (30) der ersten Anschlussseite (11) rotierbar ist, wobei die rotierbare Anschlusseinrichtung (30) mit einer sich in das Gehäuse (10) hinein erstreckenden Abtriebswelle (17) der Antriebseinrichtung (13) drehfest verbunden ist.

## Claims

1. Industrial robot (1) having a modular robot arm (2) which has a plurality of arm modules, wherein at least one arm module (5) has a housing (10) with a first connection side (11) and a second connection side (12), wherein the first connection side (11) is designed to be controllably rotatable with respect to the second connection side (12) about an axis of rotation, and wherein an optical rotation transmission device (501; 502) is arranged between the first connection side (11) and the second connection side (12) or a second connection side of a further arm module,
which has an optomechanical rotation interface (55) with a first interface side (56) and a second interface side (57), which face each other and are each designed to complement each other and to be substantially rotationally symmetrical,
wherein the first interface side (56) has an optomechanical rotary plug-in device (100) with a first optical device, and the second interface side (57) has a mating optomechanical rotary plug-in device (200) with a second optical device, which are set up so as to be rotatable relative to each other and are mounted mechanically so as to slide radially relative to each other by means of a radial plain bearing and a plain bearing shell complementary thereto,
wherein the optomechanical rotary plug-in device (100) and the mating optomechanical rotary plug-in device (200) are formed as a cylindrical hollow system, wherein a gap (312), via which the optical signal transmission is carried out, is formed between the first optical device and the second optical device in the axial direction of the rotation transmission device,
**characterized in that**
the rotary plug-in device (100) has a first ferrule (110) and the mating rotary plug-in device (200) has a second ferrule (210), wherein the first ferrule (110) and the second ferrule (210) are set up so as to be rotatable relative to each other, at least in some sections, within a radial bearing sleeve (300),
wherein the radial bearing sleeve (300) has an internal circumferential collar (330), on which the first ferrule (110) and/or the second ferrule (210) can be seated axially.

2. Industrial robot (1) according to Claim 1, wherein the mutually rotatable first and second interface sides (56, 57) of the optical rotation transmission device have a substantially fixed position in the axial direction, wherein the first interface side (56) and the second interface side (57) are mechanically preloaded against each other in the axial direction.

3. Industrial robot (1) according to Claim 1 or 2, wherein the radial bearing sleeve (300) has a longitudinal through slot (320) running completely through in the axial direction of the rotation interface (55) .

4. Industrial robot (1) according to one of Claims 1 to 3, wherein the rotary plug-in device (100) comprises a first receptacle (504; 505) for the first ferrule (110), and the mating rotary plug-in device (200) comprises a second receptacle (510; 511) for the second ferrule (210), wherein the ferrules and the receptacles are each firmly connected to one another.

5. Industrial robot (1) according to one of Claims 1 to 4, wherein the first connection side (11) is rotatable about the axis of rotation, and the second connection side (12) is set up to be fixed against rotation.

6. Industrial robot (1) according to Claim 5, wherein a drive device (13), with which a rotatable connection device (30) of the first connection side (11) can be rotated, is set up in the housing (10), wherein the rotatable connection device (30) is co-rotationally connected to an output shaft (17) of the drive device (13), which extends into the housing (10).

## Revendications

1. Robot industriel (1) avec un bras de robot modulaire (2), qui présente une pluralité de modules de bras, au moins un module de bras (5) présentant un boîtier (10) avec un premier côté de raccordement (11) et un deuxième côté de raccordement (12), le premier côté de raccordement (11) étant conçu pour pouvoir être tourné de manière contrôlable autour d'un axe de rotation par rapport au deuxième côté de raccordement (12), et un dispositif de transmission de rotation optique (501 ; 502) étant agencé entre le premier côté de raccordement (11) et le deuxième côté de raccordement (12) ou un deuxième côté de raccordement d'un autre module de bras,
qui présente une interface de rotation opto-mécanique (55) avec un premier côté d'interface (56) et un deuxième côté d'interface (57), qui se font face l'un à l'autre et sont respectivement configurés sous forme essentiellement symétrique en rotation et complémentaires l'un de l'autre,
le premier côté d'interface (56) présentant un dispositif d'enfichage opto-mécanique à rotation (100) avec un premier dispositif optique et le deuxième côté d'interface (57) présentant un dispositif d'enfichage opto-mécanique à rotation opposé (200) avec un deuxième dispositif optique, qui sont disposés de manière rotative l'un par rapport à l'autre et sont montés mécaniquement sur palier lisse radial entre eux au moyen d'un palier lisse radial et d'une coque de palier lisse complémentaire,
le dispositif d'enfichage opto-mécanique à rotation (100) et le dispositif d'enfichage opto-mécanique à rotation opposé (200) étant configurés sous forme de système à cavité cylindrique, un espace (312) étant formé entre le premier dispositif optique et le deuxième dispositif optique dans la direction axiale du dispositif de transmission de rotation, à travers lequel la transmission de signal optique s'effectue,
**caractérisé en ce que**
le dispositif d'enfichage à rotation (100) présente une première ferrule (110) et le dispositif d'enfichage à rotation opposé (200) présente une deuxième ferrule (210), la première ferrule (110) et la deuxième ferrule (210) étant respectivement disposées de manière rotative l'une par rapport à l'autre au moins par sections à l'intérieur d'un manchon de palier radial (300), le manchon de palier radial (300) présentant une collerette périphérique intérieure (330) sur laquelle la première ferrule (110) et/ou la deuxième ferrule (210) peuvent être placées axialement.

2. Robot industriel (1) selon la revendication 1, les premier et deuxième côtés d'interface (56, 57) du dispositif de transmission de rotation optique, rotatifs l'un par rapport à l'autre, possédant une position essentiellement fixe dans la direction axiale, le premier côté d'interface (56) et le deuxième côté d'interface (57) étant précontraints mécaniquement l'un par rapport à l'autre dans la direction axiale.

3. Robot industriel (1) selon la revendication 1 ou 2, le manchon de palier radial (300) présentant une fente de passage longitudinale (320) qui le traverse entièrement dans la direction axiale de l'interface de rotation (55).

4. Robot industriel (1) selon l'une quelconque des revendications 1 à 3, le dispositif d'enfichage à rotation (100) comprenant un premier logement (504 ; 505) pour la première ferrule (110) et le dispositif d'enfichage à rotation opposé (200) comprenant un deuxième logement (510 ; 511) pour la deuxième ferrule (210), les ferrules et les logements étant respectivement reliés de manière fixe les uns avec les autres.

5. Robot industriel (1) selon l'une quelconque des revendications 1 à 4, le premier côté de raccordement (11) étant disposé de manière rotative autour de l'axe de rotation et le deuxième côté de raccordement (12) étant disposé de manière fixe en rotation.

6. Robot industriel (1) selon la revendication 5, un dispositif d'entraînement (13) étant disposé dans le boîtier (10), avec lequel un dispositif de raccordement rotatif (30) du premier côté de raccordement (11) peut tourner, le dispositif de raccordement rotatif (30) étant relié de manière fixe en rotation à un arbre de sortie (17) du dispositif d'entraînement (13) s'étendant dans le boîtier (10).
